# EUROPEAN PATENT APPLICATION

(11) **EP 3 878 889 A1**
(43) Date of publication of application: **15.09.2021**
(21) Application number: 20382173.1
(22) Date of filing: 10.03.2020
(51) Int. Cl.: C08G 73/14, C08G 18/10, C08G 18/24, C08G 18/28, C08G 18/34, C08G 18/42, C08G 18/48, C08G 18/73, C08G 18/75, C08G 18/76, B33Y 10/00, B33Y 70/00, B33Y 80/00

(54) **POLYAMIDEIMIDES FOR ADDITIVE MANUFACTURING**

(71) Applicant: Henkel AG & Co. KGaA, 40589 Düsseldorf (DE)
(72) Inventor: Chou, Kang Wei, 08290 Cerdanyola del Vallès (ES); Calle de Celis, Mariola, 34880 Palencia (ES); Peral Crespo, Daniel, 08025 Barcelona (ES); Zakharova, Elena, 08003 Barcelona (ES)

(57) **Abstract**

The present invention is directed to thermoplastic polyamideimide (PAI) polymers for use in an additive manufacturing method, an additive manufacturing method comprising, in at least one step thereof, use of such a polymer, and to a three-dimensional part obtainable in such a method.

## Description

The present invention is directed to thermoplastic polyamideimide (PAI) polymers for use in an additive manufacturing method, an additive manufacturing method comprising, in at least one step thereof, use of such a polymer, and to a three-dimensional part obtainable in such a method.

Additive manufacturing is the technology that grows three-dimensional objects layer by layer. Recent advances in this technology have seen its use become far more widespread and it offers exciting possibilities for future development. FFF (Fused Filament Fabrication), SLS (Selective Laser Sintering), MJF (Multi-Jet fusion), DLP (Digital Light Processing) and SLA (Stereolitography) are the most popular techniques of additive manufacturing. Materials that may be used as feedstock for 3DP include polymers, metals, ceramics and composites.

The industrial market offers a broad variety of inexpensive materials for FFF such as acrylonitrile butadiene styrene (ABS), poly(lactic) acid (PLA), nylon, poly(ethylene terephthalate) (PET), poly(propylene) PP, poly(carbonate) (PC), acrylonitrile styrene acrylate (ASA), and flexible thermoplastic polyurethane (TPU). These materials provide good thermal stability and processability, however, they are classified as commodity or engineering plastics. Currently, polyetherimides (PEI), polyphenylsulfones (PPSU) and polyetheretherketones (PEEK) are commercially available high-performance materials for 3DP technologies. They are highly resistant to thermal degradation and have higher temperatures of processability than typical engineering plastics. The development of new materials with these characteristics would enable printing production-suitable parts.

SLS is a technique of additive manufacturing developed and patented in the 1980s, that uses a laser to sinter powdered material. The processing window (temperature range between crystallization and melting) in case of thermoplastic materials should be broad enough to obtain printed parts with high resolution. To date, the portfolio of materials suitable for SLS is rather restricted and is mostly limited to semicrystalline materials (PP, PA12, PA11, PA6, TPU, poly(methyl methacrylate) PMMA, PEEK, polyether block amide and PA composites with aluminide, carbon or glass) and a few amorphous polymers such as poly(styrene) PS, PC, ABS are also printable using this technology. The material selection for Multi Jet Fusion, developed by Hewlett-Packard technology, is even more limited to only PA11, PA12 and some special TPUs.

PAIs are high performance polymers having outstanding thermal, chemical and mechanical properties. Moreover, they exhibit low expansion coefficients, low flammability and smoke generation and low dielectric constants. The Torlon® PAI polymers, for instance, which are commercialized by Solvay, have the highest strength and stiffness of any thermoplastic up to 260°C. Due to their outstanding properties, PAI materials find a wide application in extreme environments such as industrial processes, transportation, electrical equipment, etc.

Unlike other high-performance materials, PAIs can be processed from low molecular weight oligomers, which allows for injection molding and extruding thereof. However, any such PAI parts require long post-curing cycles in order to obtain good mechanical, thermal, electrical and chemical properties. During the post-curing process, the amic acid end groups of the oligomer react forming the imide bonds, resulting in chain extension and crosslinking. Water is generated during the post-curing step, and its diffusion from the object therefore determines the required post-curing time necessary to achieve the best performance.

US Patent Application Publication No. 2016/0266573 A1 discloses the use of PAI thermosetting materials for 3DP. The system and method described yield three-dimensional parts with outstanding properties, but production costs are high due to the long thermal curing cycles (post-processing). The method described comprises the extruding of low molecular weight PAI oligomers using a specially designed FFF printer that allows for the curing of each deposited layer of prepolymer before deposition of the next layer. This way, fabrication of PAI parts is sped up by reducing the long post-curing time required for injection molded PAI parts. Nevertheless, the process is tedious, requiring a long post-curing step layer-per-layer, and a special printer is necessary for the deposition/reaction of the PAI oligomers.

Thermoplastic (non-reactive) PAIs have not been commercialized for 3D printing applications. Although other high-performance polymers such as PEI, PPSU or PEEK are commercially available for additive manufacturing, the high processability temperatures of these materials require special 3D printers that withstand the processability conditions.

There is a need, therefore, for high performance thermoplastic PAIs with improved processability, and suitability for FFF and powder bed fusion technologies.

This need is met by the polymers and methods of the present invention. This invention describes the preparation of new thermoplastic PAI materials that can be easily processed and extruded as filaments to be printed with an FFF 3D printer. The incorporation of flexible units into the PAI structure decreases the glass-transition temperature (T_{g}) while keeping good thermal stability. This allows an easy-processability without losing the high-performance properties of these polymers.

The PAI materials described in this invention can also be obtained as powders suitable for powder bed fusion 3D printing technologies, like SLS and MJF.

In one aspect, the present invention thus relates to a thermoplastic PAI polymer for use in an additive manufacturing process, wherein the PAI polymer is the reaction product obtainable by reacting:
A)
   - at least one compound according to general formula (I-A) 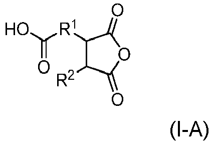 wherein, in formula (I-A),
      R¹ represents a substituted or unsubstituted C₁₋₆ hydrocarbon moiety,
      R² represents hydrogen or a substituted or unsubstituted C₁₋₆ hydrocarbon moiety,
      wherein R¹ and R² may be linked to form a substituted or unsubstituted C₅₋₇ cycloalkyl, a substituted or unsubstituted C₅₋₇ cycloalkenyl, or a substituted or unsubstituted C₆₋₁₀ aryl, wherein each substituent is independently selected from the group consisting of halogen, NO₂, linear or branched C₁₋₃ alkyl, linear or branched C₂₋₃ alkenyl, linear or branched C₁₋₃ alkoxy, - C(O)CH₃, -OC(O)CH₃, phenyl, halogen-substituted phenyl, benzyl, and halogen-substituted benzyl,
      and wherein two substituents may be linked to form an optionally halogen-, C₁₋₂ alkyl-, and/or C₁₋₂ alkoxy-substituted C₅₋₇ cycloalkyl or an optionally halogen-, C₁₋₂ alkyl-, and/or C₁₋₂ alkoxy-substituted C₆₋₁₀ aryl;
      and
   - at least one diisocyanate according to general formula (II) 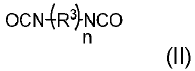 wherein, in formula (II),
      R³ is independently selected from the group consisting of linear or branched, substituted or unsubstituted C₁₋₃₀ alkyl, linear or branched, substituted or unsubstituted C₁₋₃₀ heteroalkyl, substituted or unsubstituted C₃₋₃₀ cycloalkyl, substituted or unsubstituted aryl, substituted or unsubstituted C₇₋₃₀ alkylaryl, substituted or unsubstituted C₃₋₃₀ heterocycloalkyl or heteroaryl, wherein each substituent is independently selected from the group consisting of halogen, linear or branched C₁₋₆ alkyl, and linear or branched C₁₋₆ alkoxy, and each heteroatom is independently selected from the group consisting of O, N, S, Si and P; and n is an integer from 1 to 30; and/or
   - at least one diisocyanate according to general formula (III) 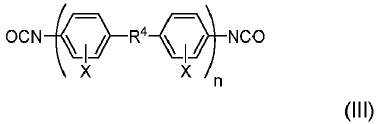 wherein, in formula (III),
      R⁴ is defined as R³ of formula (II) above, and each X is independently selected from the group consisting of hydrogen, halogen, alkoxy and linear or branched C₁₋₆ alkyl, and n is an integer from 1 to 30; and/or
   - at least one diisocyanate according to general formula (IV) 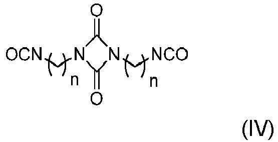 wherein, in formula (IV), n is an integer from 2 to 18; or
   - at least one diisocyanate, which is the reaction product of an aromatic diisocyanate selected from the aromatic diisocyanates according to formula (II) and (III) above, and a diol, preferably selected from the group consisting of poly(tetrahydrofurane) (polyTHF), polyester diols, and polyether diols with molecular weights ranging from 250 g/mol to 8500 g/mol; or
   - at least one aliphatic diisocyanate selected from the aliphatic diisocyanates according to formula (II) and (III) above, wherein the reaction product thus obtained is further reacted with an aromatic diisocyanate selected from the aromatic diisocyanates according to formula (II) and (III) above;
B)
   - at least one compound according to general formula (I-B) 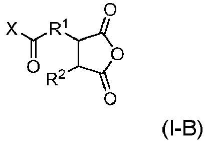 wherein, in formula (I-B),
      X represents OH or Cl,
      R¹ represents a substituted or unsubstituted C₁₋₆ hydrocarbon moiety,
      R² represents hydrogen or a substituted or unsubstituted C₁₋₆ hydrocarbon moiety,
      wherein R¹ and R² may be linked to form a substituted or unsubstituted C₅₋₇ cycloalkyl, a substituted or unsubstituted C₅₋₇ cycloalkenyl, or a substituted or unsubstituted C₆₋₁₀ aryl, wherein each substituent is independently selected from the group consisting of halogen, NO₂, linear or branched C₁₋₃ alkyl, linear or branched C₂₋₃ alkenyl, linear or branched C₁₋₃ alkoxy, - C(O)CH₃, -OC(O)CH₃, phenyl, halogen-substituted phenyl, benzyl, and halogen-substituted benzyl,
      and wherein two substituents may be linked to form an optionally halogen-, C₁₋₂ alkyl-, and/or C₁₋₂ alkoxy-substituted C₅₋₇ cycloalkyl or an optionally halogen-, C₁₋₂ alkyl-, and/or C₁₋₂ alkoxy-substituted C₆₋₁₀ aryl;
      and
   - at least one diamine compound according to general formula (V) or general formula (VI) 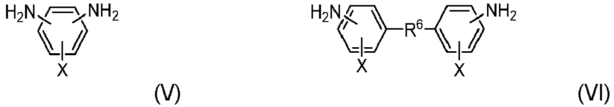 wherein, in formulas (V) and (VI),
      each X is independently selected from the group consisting of hydrogen, halogen, linear or branched C₁₋₆ alkyl and linear or branched C₁₋₆ alkoxy, and
      R⁶ is selected from the group consisting of -O-, -S-, -C(O)-, -S(O)₂-, -Si(CH₃)₂-, -(CO)O-, - (CO)NH-, -C(CF₃)₂-, linear or branched, substituted or unsubstituted C₁₋₃₀ alkyl, linear or branched, substituted or unsubstituted C₁₋₃₀ heteroalkyl, linear or branched, substituted or unsubstituted C₃₋₃₀ cycloalkyl, linear or branched, substituted or unsubstituted C₃₋₃₀ heterocycloalkyl, a substituted or unsubstituted C₆₋₂₆ aryl, a substituted or unsubstituted C₆₋₂₆ heteroaryl, a substituted or unsubstituted C₇₋₃₀ alkylaryl, a substituted or unsubstituted C₇₋₃₀ heteroalkylaryl,
      wherein each substituent is independently selected from the group consisting of halogen, linear or branched C₁₋₃ alkyl and linear or branched C₁₋₃ alkoxy, and
      wherein each heteroatom is independently selected from the group consisting of O, N, S, P and Si, preferably O, S, and Si;
C)
   - at least one compound according to general formula (I-C) 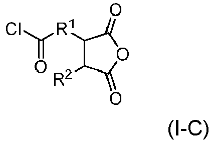 wherein
      R¹ represents a substituted or unsubstituted C₁₋₆ hydrocarbon moiety,
      R² represents hydrogen or a substituted or unsubstituted C₁₋₆ hydrocarbon moiety,
      wherein R¹ and R² may be linked to form a substituted or unsubstituted C₅₋₇ cycloalkyl, a substituted or unsubstituted C₅₋₇ cycloalkenyl, or a substituted or unsubstituted C₆₋₁₀ aryl,
      wherein each substituent is independently selected from the group consisting of halogen, NO₂, linear or branched C₁₋₃ alkyl, linear or branched C₂₋₃ alkenyl, linear or branched C₁₋₃ alkoxy, - C(O)CH₃, -OC(O)CH₃, phenyl, halogen-substituted phenyl, benzyl, and halogen-substituted benzyl,
      and wherein two substituents may be linked to form an optionally halogen-, C₁₋₂ alkyl-, and/or C₁₋₂ alkoxy-substituted C₅₋₇ cycloalkyl or an optionally halogen-, C₁₋₂ alkyl-, and/or C₁₋₂ alkoxy-substituted C₆₋₁₀ aryl;
   - at least one dianhydride compound according to general formula (VII), general formula (VIII), and/or general formula (IX) 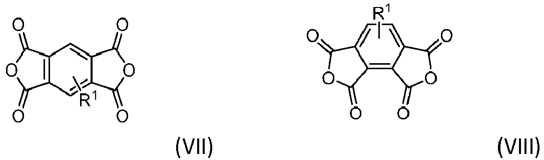 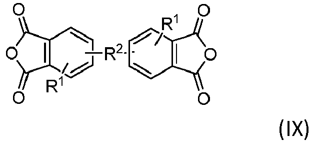 wherein, in formulas (VII)-(IX),
      R¹ independently is selected from the group consisting hydrogen, halogen, linear or branched C₁₋₃ alkyl, and linear or branched C₁₋₃ alkoxy; and
      R² is selected from the group consisting of -O-, -S-, -C(O)-, -S(O)₂-, linear or branched, optionally halogen-substituted C₁₋₅ alkyl, linear or branched, optionally halogen-substituted C₁₋₅ heteroalkyl, linear or branched, optionally halogen-substituted C₂₋₅ alkenyl, linear or branched, optionally halogen-substituted C₂₋₅ heteroalkenyl, a -O-R³-O- group, wherein R³ is selected from the group consisting of 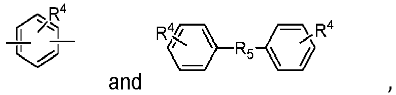 wherein each R⁴ is independently selected from hydrogen, halogen, and linear or branched C₁₋₃ alkoxy and linear or branched C₁₋₃ alkyl, and R⁵ is selected from the group consisting of -O-, -S-, -C(O)-, -S(O)₂-, linear or branched, optionally halogen-substituted C₁₋₅ alkyl, linear or branched, optionally halogen-substituted C₁₋₅ heteroalkyl, linear or branched, optionally halogen-substituted C₂₋₅ alkenyl, linear or branched, optionally halogen-substituted C₂₋₅ heteroalkenyl, wherein each heteroatom is selected from the group consisting of O, N, S, P and Si, preferably O, S and Si;
      and
   - at least one diamine compound according to general formula (V) or general formula (VI) as defined above;
   or
D)
   - at least one dianhydride according to formulas (VII)-(IX) as defined above,
   - at least one amide moiety-containing compound according to general formula (X) 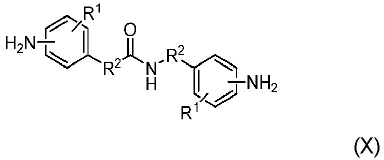 wherein, in formula (X),
      each R¹ is independently selected from the group consisting of hydrogen, halogen, -C(O)-, linear or branched, substituted or unsubstituted C₁₋₆ alkyl, and linear or branched substituted or unsubstituted C₁₋₆ alkoxy, and
      each R² is independently selected from the group consisting of linear or branched, substituted or unsubstituted C₁₋₆ alkylene, linear or branched, substituted or unsubstituted C₂₋₆ alkenylene, linear or branched, substituted or unsubstituted C₃₋₆ cycloalkylene, and linear or branched, substituted or unsubstituted C₆₋₁₀ arylene,
      wherein each substituent is independently selected from the group consisting of halogen, linear or branched C₁₋₃ alkyl and linear or branched C₁₋₃ alkoxy,
      and, optionally,
   - at least one diamine compound according to general formula (V) or general formula (VI) as defined above.

In another aspect, the present invention relates to an additive manufacturing method, the method comprising, in at least one step thereof, the use of at least one PAI polymer, as disclosed herein.

In yet another aspect, the present invention relates to a three-dimensional part obtainable in an additive manufacturing method as described herein.

Embodiments of the present invention are described below, but the present invention is not limited thereto. It should be recognized that these embodiments are merely illustrative of the principles of the present invention. Numerous modifications and adaptations will be readily apparent to those skilled in the art without departing from the scope of the invention.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules.

In the present specification, the terms "a" and "an" and "at least one" are the same as the term "one or more" and can be employed interchangeably.

"About", as used herein in relation to a numerical value, means said value ±10%, preferably ±5%.

All percentages given herein in relation to the compositions or formulations relate to weight % relative to the total weight of the respective composition or formula, if not explicitly stated otherwise.

The terms "3D (three dimensional) printer", "three-dimensional printing system," 3D-printing", "printing," and the like generally describe various solid freeform fabrication techniques for making three-dimensional (3D) articles, objects or parts, herein used interchangeably, by selective deposition, jetting, fused deposition modeling, and other techniques now known in the art or that may be known in the future that use a build material or print material to fabricate the three-dimensional object.

The term "alkyl," by itself or as part of another substituent, means, unless otherwise stated, a straight (i.e. unbranched) or branched chain, or combination thereof, which is fully saturated and can include di- and multivalent radicals, having the number of carbon atoms designated (i.e. C₁-₁₀ means one to ten carbon atoms). Examples of saturated hydrocarbon radicals include, but are not limited to, groups such as methyl, ethyl, n-propyl, isopropyl, n-butyl, t-butyl, isobutyl, sec-butyl, cyclohexyl, (cyclohexyl)methyl, cyclopropylmethyl, homologs and isomers of, for example, n-pentyl, n-hexyl, n-heptyl, n-octyl, and the like.

The term "heteroalkyl," by itself or in combination with another term, means, unless otherwise stated, a stable straight or branched chain hydrocarbon radical, or combinations thereof, consisting of at least one carbon atom and at least one heteroatom selected from the group consisting of O, N, P, Si and S, unless otherwise stated, and wherein the nitrogen and sulfur atoms may optionally be oxidized and the nitrogen heteroatom may optionally be quaternized. The heteroatom(s) O, N, P and S and Si may be placed at any interior position of the heteroalkyl group or at the position at which the alkyl group is attached to the remainder of the molecule. Examples include, but are not limited to, -CH₂-CH₂-O-CH₃, -CH₂-CH₂-NH-CH₃, -CH₂-CH₂-N(CH₃)-CH₃, -CH₂-S-CH₂-CH₃, -CH₂-CH₂, -S(O)-CH₃, - CH₂-CH₂-S(O)₂-CH₃,-Si(CH₃)₃, -O-CH₃, -O-CH₂-CH₃, and -CN. Up to two heteroatoms may be consecutive, such as, for example, -CH₂-NH-OCH₃ and -CH₂-O-Si(CH₃)₃.

The term "alkenyl", as used herein, is a hydrocarbon containing a number of carbon atoms in the alkenyl chain as specified (i.e. C₂-₁₀ means two to ten carbon atoms) and comprising at least one carbon-carbon double bond. Asymmetric structures are intended to include both the E and Z isomers. Examples of alkenyl include, without limitation, ethenyl, propenyl, and isopropenyl.

The terms "cycloalkyl" and "heterocycloalkyl" by themselves or in combination with other terms, represent, unless otherwise stated, cyclic versions of "alkyl" and "heteroalkyl", respectively. Additionally, for heterocycloalkyl, a heteroatom can occupy the position at which the heterocycle is attached to the remainder of the molecule. Examples of cycloalkyl include, but are not limited to, cyclopentyl, cyclohexyl, 1-cyclohexenyl, 3-cyclohexenyl, cycloheptyl, and the like. Examples of heterocycloalkyl include, but are not limited to, 1-(1,2,5,6-tetrahydropyridyl), 1-piperidinyl, 2-piperidinyl, 3-piperidinyl, 4-morpholinyl, 3-morpholinyl, tetrahydrofuran-2-yl, tetrahydrofuran-3-yl, tetrahydrothien-2-yl, tetrahydrothien-3-yl, 1-piperazinyl, 2-piperazinyl, and the like.

The term "cycloalkenyl", as used herein, is a non-aromatic carbon-based ring composed of at least three carbon atoms and containing at least one carbon-carbon double bound, i.e., C=C. Examples of cycloalkenyl groups include, but are not limited to, cyclopropenyl, cyclobutenyl, cyclopentenyl, cyclopentadienyl, cyclohexenyl, cyclohexadienyl, norbornenyl, and the like.

The term "halogen," by itself or as part of another substituent, means, unless otherwise stated, a fluorine, chlorine, bromine, or iodine atom.

The term "aryl" means, unless otherwise stated, a polyunsaturated, aromatic hydrocarbon moiety, which can be a single ring or multiple rings (preferably from 1 to 3 rings), which are fused together or linked covalently. The term "heteroaryl" refers to aryl groups (or rings) that contain from one to four heteroatoms selected from N, O, and S, unless otherwise stated, wherein the nitrogen and sulfur atoms are optionally oxidized, and the nitrogen atom(s) are optionally quaternized. A heteroaryl group can be attached to the remainder of the molecule through a carbon or heteroatom. Non-limiting examples of aryl and heteroaryl groups include phenyl, 1-naphthyl, 2-naphthyl, 4-biphenyl, 1-pyrrolyl, 2-pyrrolyl, 3-pyrrolyl, 3-pyrazolyl, 2-imidazolyl, 4-imidazolyl, pyrazinyl, 2-oxazolyl, 4-oxazolyl, 2-phenyl-4-oxazolyl, 5-oxazolyl, 3-isoxazolyl, 4-isoxazolyl, 5-isoxazolyl, 2-thiazolyl, 4-thiazolyl, 5-thiazolyl, 2-furyl, 3-furyl, 2-thienyl, 3-thienyl, 2-pyridyl, 3-pyridyl, 4-pyridyl, 2-pyrimidyl, 4-pyrimidyl, 5-benzothiazolyl, purinyl, 2-benzimidazolyl, 5-indolyl, 1-isoquinolyl, 5-isoquinolyl, 2-quinoxalinyl, 5-quinoxalinyl, 3-quinolyl, and 6-quinolyl.

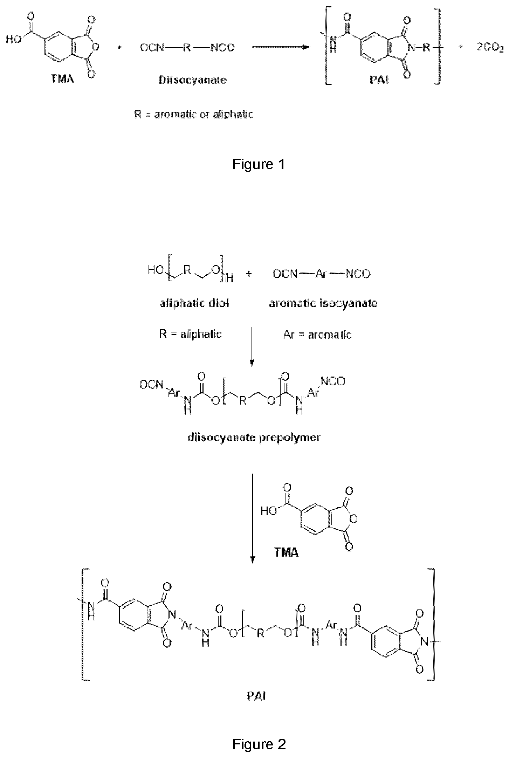

**Figure 1:** Figure 1 shows the synthesis of PAIs according to the invention following synthetic route A). The compound according to formula (I-A) is trimellitic acid (TMA). The diisocyanate may be chosen as herein defined.
**Figure 2:** Figure 2 shows the synthesis of PAIs according to the invention following another embodiment of synthetic route A). An aliphatic diol is reacted with an aromatic diisocyanate, as herein defined to form a diisocyanate prepolymer, which is then reacted with a compound according to formula (I-A) to yield the final PAI polymer.

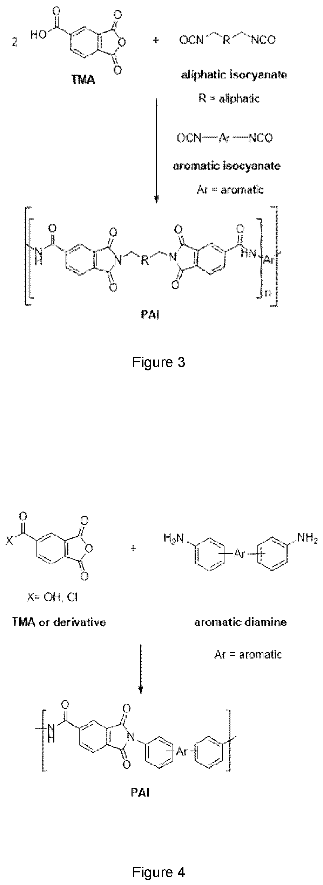

**Figure 3:** Figure 3 depicts the synthesis of PAIs according to the invention following yet another embodiment of synthetic route (A). An aliphatic diisocyanate is end-capped with a compound according to formula (I-A), here TMA, and chain extended with an aromatic diisocyanate to yield the final PAI.
**Figure 4:** Figure 4 details the synthesis of PAIs according to the invention following synthetic route (B). Here, trimellitic anhydride or a derivative thereof is reacted with an aromatic diamine, as herein defined, to yield the final PAI.

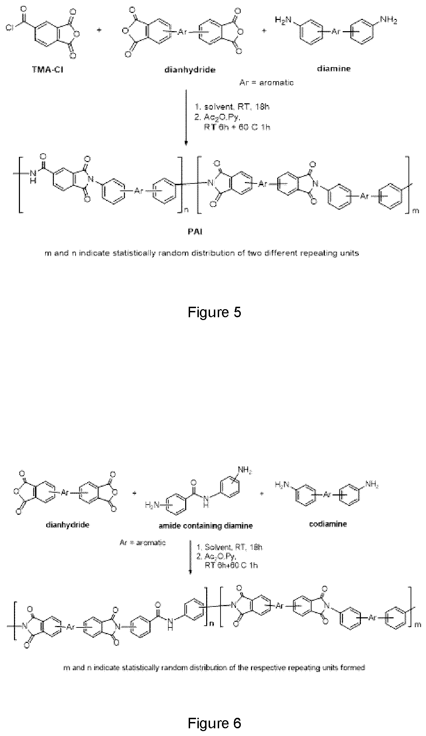

**Figure 5:** Figure 5 depicts the synthesis of PAIs according to the invention starting from a compound (I-C), here TMA-Cl, an aromatic dianhydride and an aromatic diamine in a two-step process according to route (C).
**Figure 6:** Figure 6 shows the synthesis of PAIs according to the invention following synthetic route (D). In a polyamidation reaction, dianhydrides and diamines comprising an amide linkage are reacted forming the PAI basic repeating unit. Additionally, codiamines may be incorporated to tailor thermal transitions and melt processability of the final PAI.
**Figure 7:** Figure 7 depicts the melt complex viscosities (η*) of different PAIs as a function of temperature.
**Figure 8:** Figure 8 is a photograph taken of a coiled up PAI filament according to the invention (PAI-3, Example 8).
**Figure 9:** Figure 9 is an SEM image of PAI-A (Example 4) particles formed by melt-blending with PEG 35000 (40/60 w/w).

The present invention focuses on the preparation of PAI thermoplastics for additive manufacturing. Wholly aromatic PAIs are high performance materials possessing excellent thermal, chemical and mechanical properties. They are reported as flame-retardant polymers and possess a low dielectric constant. However, due to their rigid backbone structure they are generally difficult to process in the melt which limits their use in applications such as 3D-printing.

Improvement of melt processability may be effected in various ways. By incorporating flexible units in the polymer structure, properties such as glass transition temperature, melt viscosity and hence processability can be adjusted without significantly compromising thermal and chemical resistance. Some examples of flexible units include but are not limited to: -O-, -S-, -SO₂-, -CO-, -C(CH₃)₂-, etc. In addition, incorporating aliphatic moieties into the aromatic PAI structure reduces also the rigidity of the polymer chain. However, the disadvantage of using aliphatic units is the partial deterioration of the PAI thermal resistance.

The development of PAIs suitable for 3DP applications requires the molecular design of the polymer backbone structure to meet requirements such as processability and thermal stability. PAI grades suitable for 3DP are thermoplastic materials that can be processed as a filament in the molten state in the case of the fused filament fabrication technology (FFF) or obtained as a powder for the powder bed fusion technologies (SLS and MJF). The materials to be printed by SLS and MJF further should fulfill special requirements such as a specific size and morphology of the polymer particles. They should have a wide processing window, low zero viscosity and surface tension. Finally, they should absorb energy at determined laser or lamp wavelengths.

The herein described PAI polymers for use in an additive manufacturing process are obtainable by way of four different synthetic routes A), B), C), and D), as specified herein below.

According to synthetic route A), at least one compound according to general formula (I-A), as defined herein below, 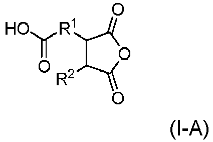 is reacted with at least one diisocyanate according to general formula (II), as defined herein below, 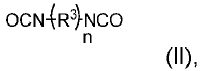 and/or at least one diisocyanate according to general formula (III), as defined herein below, 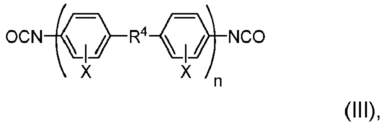 and/or with at least one diisocyanate according to general formula (IV), as defined herein below,

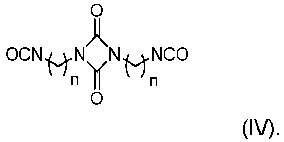

According to certain embodiments, a compound according to formula (I-A) and at least one compound selected from compounds of formulae (II), (III), and (IV) are reacted in an equimolecular ratio. In various embodiments, the reaction takes place under inert atmosphere and, according to further embodiments, at temperatures around 130 °C. According to this first embodiment of synthetic route A), the formation of the final PAI structure yields 2 mol of carbon dioxide per PAI repeating unit. Preferably, high boiling point polar aprotic solvents are used such as, for instance and without limitation, N-methyl pyrrolidone (NMP). The reaction can also be performed in the absence of solvents, in bulk conditions, when aliphatic isocyanates are employed. The use of catalysts is also possible although not indispensable.

In the compounds represented by formula (I-A), 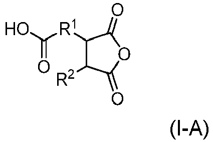
R¹ represents a substituted or unsubstituted C₁₋₆ hydrocarbon moiety,
R² represents hydrogen or a substituted or unsubstituted C₁₋₆ hydrocarbon moiety,
wherein R¹ and R² may be linked to form a substituted or unsubstituted C₅₋₇ cycloalkyl, a substituted or unsubstituted C₅₋₇ cycloalkenyl, or a substituted or unsubstituted C₆₋₁₀ aryl,
wherein each substituent is independently selected from the group consisting of halogen, NO₂, linear or branched C₁₋₃ alkyl, linear or branched C₂₋₃ alkenyl, linear or branched C₁₋₃ alkoxy, -C(O)CH₃, - OC(O)CH₃, phenyl, halogen-substituted phenyl, benzyl, and halogen-substituted benzyl,
and wherein two substituents may be linked to form an optionally halogen-, C₁₋₂ alkyl-, and/or C₁₋₂ alkoxy-substituted C₅₋₇ cycloalkyl or an optionally halogen-, C₁₋₂ alkyl-, and/or C₁₋₂ alkoxy-substituted C₆₋₁₀ aryl.

According to various embodiments, at least one compound according to formula (I-A) is selected from the group consisting of the following compounds (I-1)-(I-24):

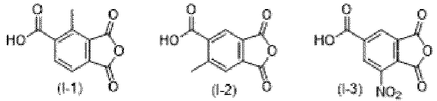

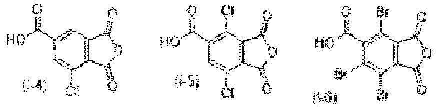

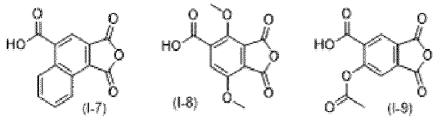

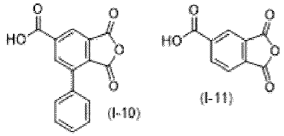

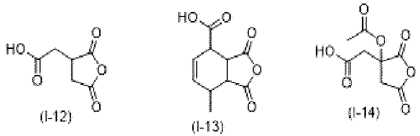

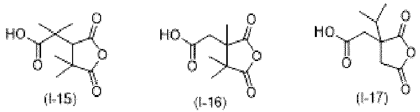

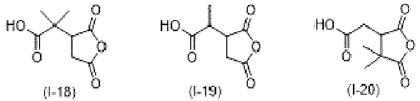

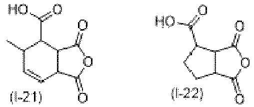

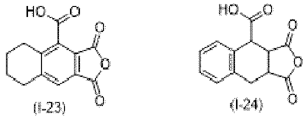

In the compounds represented by general formula (II) 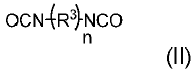 R³ is independently selected from the group consisting of linear or branched, substituted or unsubstituted C₁₋₃₀ alkyl, linear or branched, substituted or unsubstituted C₁₋₃₀ heteroalkyl, substituted or unsubstituted C₃₋₃₀ cycloalkyl, substituted or unsubstituted aryl, substituted or unsubstituted C₇₋₃₀ alkylaryl, substituted or unsubstituted C₃₋₃₀ heterocycloalkyl or heteroaryl, wherein each substituent is independently selected from the group consisting of halogen, linear or branched C₁₋₆ alkyl, and linear or branched C₁₋₆ alkoxy, and each heteroatom is independently selected from the group consisting of O, N, S, Si and P; and n is an integer from 1 to 30;

In the compounds according to general formula (III) 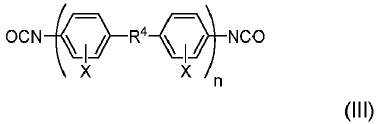 R⁴ is defined as R³ of formula (II) above, and each X is independently selected from the group consisting of hydrogen, halogen, linear or branched substituted or unsubstituted C₁₋₆ alkoxy and linear or branched C₁₋₆ alkyl, and n is an integer from 1 to 30.

In the compounds according to general formula (IV) 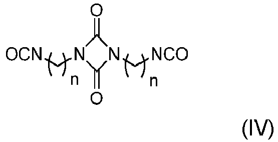 n is an integer from 2 to 18.

Diisocyanates according to formula (II), (III) or (IV), as defined above, suitable for employment in the methods described herein, include commercially available aromatic and aliphatic isocyanates, including monomers and prepolymers. Suitable diisocyanates include, but are not limited to, isocyanates selected from the group consisting of Desmodur XP 2617, Desmodur VPLS 2371, Desmodur E20100, Desmodur E15, Tolonate X FLO 100, 4,4'-methylenebis (phenyl isocyanate) (MDI) and tolylene-2,4-diisocyanate (TDI), 3,3'-dimethoxylbiphenyl-4,4'-diisocyanate, m,p-phenylene diisocyanate, 1,5-naphthalene diisocyanate, 4,4'-diphenylmethane diisocyanate, 3,3'-dimethyl-4,4'-diphenylmethane diisocyanate, 3,3'-dimethyl-4,4'-biphenyldiisocyanate, 4,4'-diphenylisopropylidene diisocyanate, 3,3'-dimethyl-4,4'-diphenyl diisocyanate, dianisidine diisocyanate, and toluidine diisocyanate.

Alternatively, according to synthetic route A), at least one compound according to general formula (I-A), as defined herein above, is reacted with at least one diisocyanate, which is the reaction product of an aromatic diisocyanate selected from the diisocyanates according to formula (II) and (III) above, and a diol, particularly an aliphatic diol.

In the context of the present invention, a compound, such a diisocyanate compound according to formula (II), is considered an aromatic compound, if the backbone of the respective compound comprises at least one aromatic moiety, such as a phenylene moiety. However, if the backbone of the respective is aliphatic and the aliphatic chain is merely substituted with one or more aromatic moieties, the respective compound is not considered an aromatic diisocyanate, but an aliphatic diisocyanate.

The synthesis of the diisocyanate prepolymer may be carried out using NMP as solvent and dibutyltin dilaurate (DBTDL) as catalyst, at 80 °C for 5 h, as exemplified, but not limited by, Example 2. Other high boiling point polar aprotic solvents are also suitable, as well as other catalysts, such as bases (such as pyridine and triethylamine) or tin-based catalysts (such as DBTDL and Sn(Oct)₂). The skilled artisan is familiar with the respective reaction conditions that may be varied and tailored, depending on the respective reactants used, as defined herein. This applies to each synthetic procedure and every embodiment according to synthetic routes A), B), C), and D) herein described.

The diisocyanate prepolymers are further reacted with a compound according to formula (I-A), generally by increasing the temperature, preferably up to 130 °C, over a period of several hours.

The incorporation of aliphatic building blocks in the PAI structure is of significant import when aiming at obtaining PAIs with low processing temperatures.

Suitable aliphatic diols include, but are not limited to poly(tetrahydrofurane) (polyTHF), polyester diols, and polyether diols. Diols suitable in the context of the present invention have molecular weights ranging from about 250 g/mol to about 8000 g/mol. Suitable polyTHF diols include, but are not limited to, polyTHFs with molecular weights in the range of 250 g/mol to about 2000 g/mol. Suitable polyesters-polyols include but are not limited to the Dynacoll 7000 series commercialized by Evonik, such as the Dynacoll 7110, Dynacoll 7111, Dynacoll 7130, Dynacoll 7140, Dynacoll 7150, Dynacoll 7210, Dynacoll 7230, Dynacoll 7231, Dynacoll 7250, Dynacoll 7255, Dynacoll 7320, Dynacoll 7321, Dynacoll 7330, Dynacoll 7331, Dynacoll 7340, Dynacoll 7360, Dynacoll 7361, Dynacoll 7362, Dynacoll 7363, Dynacoll 7365, Dynacoll 7380, Dynacoll 7381, Dynacoll 7390, Dynacoll 7391, Dynacoll 7490.

According to yet another alternative embodiment of synthetic route A), aliphatic units are incorporated into the PAI structure *via* initial end-capping of aliphatic isocyanates with a compound according to formula (I-A), followed by polymerization of the thus obtained intermediate with aromatic isocyanates. Said end-capping is best effected employing two equivalents of compound (I-A). According to this embodiment of route A), at least one compound according to formula (I-A) is reacted with at least one aliphatic diisocyanate selected from the diisocyanates according to formula (II) and (III) above, wherein the reaction product thus obtained is further reacted with an aromatic diisocyanate selected from the aromatic diisocyanates according to formula (II) and (III) above.

In a second synthetic method B), the thermoplastic PAIs can be obtained by reacting at least one compound represented by general formula (I-B), as defined herein below, 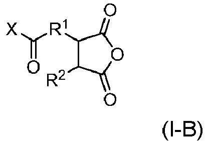 and at least one diamine compound according to general formula (V), as defined herein below, and/or general formula (VI), as defined herein below, 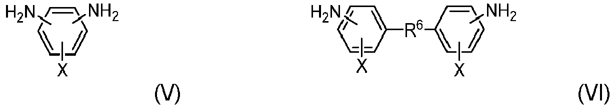 preferably in an equivalent mol ratio. According to preferred embodiments, the reaction is carried out at high temperatures (∼200 °C) and in the presence of catalysts, such as triphenylphosphate or triphenylphosphite, although other catalysts may be employed alternatively.

The use of the more reactive chloride derivatives (I-B) (with X = Cl in formula (I-B)) allows for milder reaction conditions while yielding materials with nonetheless outstanding properties. Generally, this reaction is performed in a two-steps process. An initial step at about room temperature (RT) for about 10 to about 24 hours, preferably about 16 to about 20 hours, more preferably about 18 hours, that involves the formation of a poly(amic acid) intermediate, is followed by an imidization step performed at about RT for about 2 to 12 hours, preferably about 4 to 10 hours, more preferably about 6 hours, and an additional 0.5 to 5 hours, preferably about 1 to 3 hours, more preferably about 1 hour at about 40 to 80 °C, preferably about 50 to 70 °C, more preferably about 60 °C, in the presence of an carboxylic acid anhydride, such as acetic anhydride (Ac₂O), trimethylacetic anhydride, propionic anhydride, acetic propionic anhydride, butyric anhydride, isobutyric anhydride, isovaleric anhydride, hexanoic anhydride, dodecanoic anhydride, acetic butanoic anhydride, benzoic anhydride and a base, such as pyridine (Py), aniline, triethylamine, ethylamine, diethylamine, methylamine, hydroxylamine, DABCO (1,4-diazabibyclo[2.2.2]octane, DBU (1,8-diazabicyclo[5.4.0]undec-7-ene) to afford the final PAI.

Exemplary amounts are indicated, but not limited to those of Examples 5 and 6.

Diamines incorporating flexible groups were chosen to improve the melt processability of the final PAI. Copolymerization is an effective way for molecular design to balance the processability and the desired properties. The combined use of two diamines in different ratios allows for fine-tuning of the thermal and processability properties of the final PAI material. The ratio between both diamines used affects the glass transition and melting point. By simply changing the ratio between the diamines in the PAI backbone, a material with a unique combination of T_{g}, Tₘ and processability can be prepared.

In a preferred embodiment, the diamine 2,2-bis[4-(4-aminophenoxy)phenyl]propane is used preferably, because it comprises four phenyl rings connected by ether linkages and an isopropylidene group, which impart high flexibility and processability to the final material. 4,4'-(1,3-Phenylenedioxy)dianiline is also preferred, because it contains three phenyl rings meta-connected by flexible ether groups that should decrease the molecular packing and improve the PAI processability. The higher the ratio of 4,4'-(1,3-phenylenedioxy)dianiline, the higher the degree of crystallinity. The melting points of PAIs thus obtained can range from about 300 °C to 380 °C. An increase of the amount of 2,2-bis[4-(4-aminophenoxy)phenyl]propane disrupts the crystallinity. The PAI homopolymer based on the 2,2-bis[4-(4-aminophenoxy)phenyl]propane diamine is a completely amorphous material with a glass transition temperature around 220°C. Degradation temperatures are not affected by the different ratios between both diamines.

In the compounds according to formula (I-B), 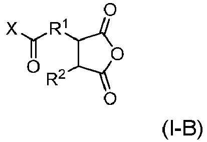
X represents OH or Cl,
R¹ represents a substituted or unsubstituted C₁₋₆ hydrocarbon moiety,
R² represents hydrogen or a substituted or unsubstituted C₁₋₆ hydrocarbon moiety,
wherein R¹ and R² may be linked to form a substituted or unsubstituted C₅₋₇ cycloalkyl, a substituted or unsubstituted C₅₋₇ cycloalkenyl, or a substituted or unsubstituted C₆₋₁₀ aryl,
wherein each substituent is independently selected from the group consisting of halogen, NO₂, linear or branched C₁₋₃ alkyl, linear or branched C₂₋₃ alkenyl, linear or branched C₁₋₃ alkoxy, -C(O)CH₃, - OC(O)CH₃, phenyl, halogen-substituted phenyl, benzyl, and halogen-substituted benzyl,
and wherein two substituents may be linked to form an optionally halogen-, C₁₋₂ alkyl-, and/or C₁₋₂ alkoxy-substituted C₅₋₇ cycloalkyl or an optionally halogen-, C₁₋₂ alkyl-, and/or C₁₋₂ alkoxy-substituted C₆₋₁₀ aryl.

According to various embodiments, the compound according to formula (I-B), as defined above, is selected from the group consisting of compounds (I-1)-(I-24) listed above, and from the group consisting of the following compounds (I-25)-(I-48):

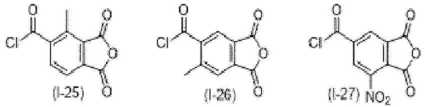

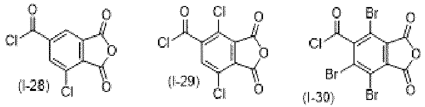

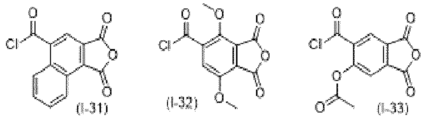

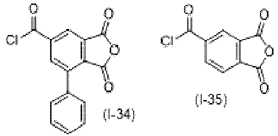

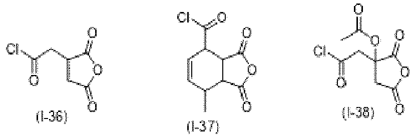

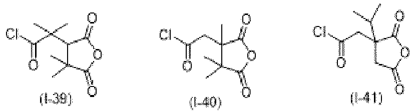

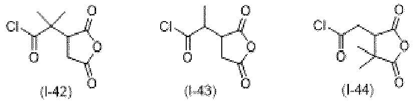

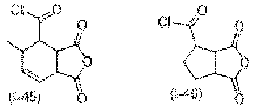

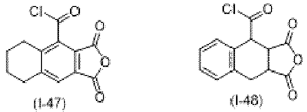

In the compounds represented by general formula (V) or general formula (VI) 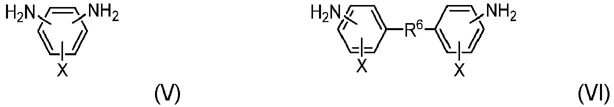
each X is independently selected from the group consisting of hydrogen, halogen, linear or branched C₁₋₆ alkyl and linear or branched C₁₋₆ alkoxy, and
R⁶ is selected from the group consisting of -O-, -S-, -C(O)-, -S(O)₂-, linear or branched, substituted or unsubstituted C₁₋₃₀ alkyl, linear or branched, substituted or unsubstituted C₁₋₃₀ heteroalkyl, linear or branched, substituted or unsubstituted C₃₋₃₀ cycloalkyl, linear or branched, substituted or unsubstituted C₃₋₃₀ heterocycloalkyl, a substituted or unsubstituted C₆₋₂₆ aryl, a substituted or unsubstituted C₆₋₂₆ heteroaryl, a substituted or unsubstituted C₇₋₃₀ alkylaryl, a substituted or unsubstituted C₇₋₃₀ heteroalkylaryl,
wherein each substituent is independently selected from the group consisting of halogen, linear or branched C₁₋₃ alkyl and linear or branched C₁₋₃ alkoxy, and
wherein each heteroatom is independently selected from the group consisting of O, N, S, P and Si, preferably O, S, and Si.

In various embodiments, the diamine compound according to formula (V) or formula (VI) is selected from the group consisting of 2,2-bis[4-(4-aminophenoxy)phenyl]propane, 4,4'-(1,3-phenylenedioxy)dianiline, bis[4-(3-aminophenoxy)phenyl]sulfone, bis[4-(4-aminophenoxy)phenyl] sulfone, 2,2-bis[4-(4-aminophenoxy)phenyl]hexafluoropropane, bis[4-(4-aminophenoxy)phenyl]methane, 4,4'-bis(4-aminophenoxy)biphenyl, bis[4-(4-aminophenoxy)phenyl] ether, bis[4-(4-aminophenoxy)phenyl]ketone, 1,3-bis(4- aminophenoxy)benzene, 1,4-bis(4-aminophenoxy)benzene, 2,2'-dimethylbiphenyl-4,4'-diamine, 2,2'-bis(trifluoromethyl)biphenyl-4,4'-diamine, 2,6,2',6'-tetramethyl-4,4-diamine, 5,5'-dimethyl-2,2'-sulfonyl-biphenyl-4,4'-diamine, (4,4'-diamino)diphenyl ether, (4,4'-diamino)diphenylsulfone, (4,4'-diamino)benzophenone, (3,3'-diamino)benzophenone, (4,4'-diamino)diphenylmethane, (4,4'-diamino)diphenyl ether and (3,3'-diamino)diphenyl ether, preferably from 2,2-bis[4-(4-aminophenoxy)phenyl]propane and 4,4'-(1,3-phenylenedioxy)dianiline.

A third synthetic route C) for the synthesis of PAIs according to the present invention is based on the combined use of a compound represented by general formula (I-C), as defined herein below, 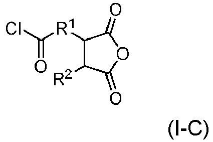 and at least one dianhydride compound of general formula (VII), general formula (VIII), or general formula (IX), as defined herein below,

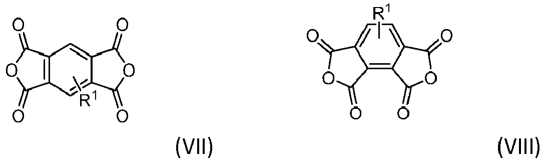

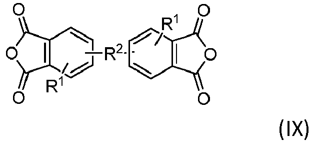

in the polymerization reaction with at least one diamine compound. According to preferred embodiments, the aforementioned reagents are employed in a stoichiometric ratio. Preferred reaction conditions include temperatures of about RT, inert atmosphere (N₂), and reaction times in the range of about 10 to about 24 hours, preferably about 12 to about 20 hours, more preferably about 16 to about 19 hours, such as about 18 hours. Suitable solvents include, without limitation, DMAc and NMP, and mixtures thereof, although other solvents may be advantageously used, depending on the particular reactants used. Thus, the poly(amic acid) prepolymer is formed, followed by an imidization step performed at about RT for a period of about 3 to 12 hours, preferably about 4 to 8 hours, such as about 6 hours, and an additional period of about 0.5 to about 4 hours, such as about 1 hour, at about 40 to about 80 °C, preferably about 50 to about 70 °C, more preferably about 60°C, in the presence of a carboxylic acid anhydride, such as acetic anhydride (Ac₂O), and a base, such as pyridine (Py), to afford the final PAI.

In compounds according to formula (I-C) 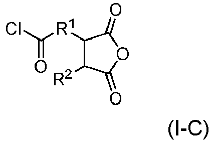
R¹ represents a substituted or unsubstituted C₁₋₆ hydrocarbon moiety,
R² represents hydrogen or a substituted or unsubstituted C₁₋₆ hydrocarbon moiety,
wherein R¹ and R² may be linked to form a substituted or unsubstituted C₅₋₇ cycloalkyl, a substituted or unsubstituted C₅₋₇ cycloalkenyl, or a substituted or unsubstituted C₆₋₁₀ aryl,
wherein each substituent is independently selected from the group consisting of halogen, NO₂, linear or branched C₁₋₃ alkyl, linear or branched C₂₋₃ alkenyl, linear or branched C₁₋₃ alkoxy, -C(O)CH₃, - OC(O)CH₃, phenyl, halogen-substituted phenyl, benzyl, and halogen-substituted benzyl,
and wherein two substituents may be linked to form an optionally halogen-, C₁₋₂ alkyl-, and/or C₁₋₂ alkoxy-substituted C₅₋₇ cycloalkyl or an optionally halogen-, C₁₋₂ alkyl-, and/or C₁₋₂ alkoxy-substituted C₆₋₁₀ aryl.

According to some embodiments, at least one compound according to formula (I-C) is selected from the group consisting of compounds (I-25)-(I-48) listed above.

The compounds of formula (I-C) have a rather rigid structure that result in PAIs, which can be difficult to process in the melt. The addition of a highly flexible dianhydride, as defined above, provides improved processability without impairing the overall thermal stability.

Dianhydride compounds suitable in this context are generally represented by formula (VII), formula (VIII), and formula (IX) 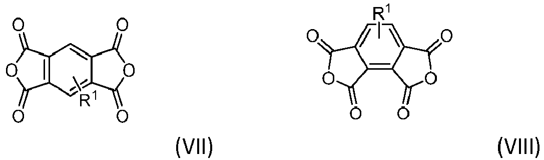 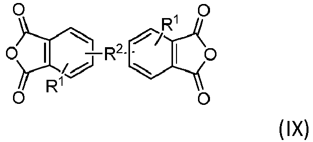 wherein, in formulas (VII)-(IX),
R¹ independently is selected from the group consisting hydrogen, halogen, linear or branched C₁₋₃ alkyl, and linear or branched C₁₋₃ alkoxy; and
R² is selected from the group consisting of -O-, -S-, -C(O)-, -S(O)₂-, linear or branched, optionally halogen-substituted C₁₋₅ alkyl, linear or branched, optionally halogen-substituted C₁₋₅ heteroalkyl, linear or branched, optionally halogen-substituted C₂₋₅ alkenyl, linear or branched, optionally halogen-substituted C₂₋₅ heteroalkenyl, a -O-R³-O- group, wherein R³ is selected from the group consisting of 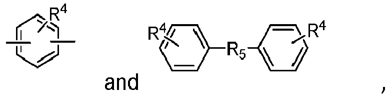 wherein each R⁴ is independently selected from hydrogen, halogen and linear or branched C₁₋₃ alkyl, and R⁵ is selected from the group consisting of -O-, -S-, - C(O)-, -S(O)₂-, linear or branched, optionally halogen-substituted C₁₋₅ alkyl, linear or branched, optionally halogen-substituted C₁₋₅ heteroalkyl, linear or branched, optionally halogen-substituted C₂₋₅ alkenyl, linear or branched, optionally halogen-substituted C₂₋₅ heteroalkenyl,
wherein each heteroatom is selected from the group consisting of O, N, S, P and Si, preferably O, S and Si.

In various embodiments, the dianhydride compound according to formula (VII), (VIII) or (IX) is selected from the group consisting of 4,4'-bisphenol A dianhydride (BPADA), 4,4'-oxydiphthalicanhydride (ODPA), 3,3',4,4'-benzophenone tetracarboxylic dianhydride (4,4-BTDA), 4,4'-(hexafluoroisopropylidene)diphthalic anhydride (6FDA), 3,3',4,4'-diphenylsulfonetetracarboxylic dianhydride, pyromellitic dianhydride, 3,3'-dimethyl-4,4'-diisocyanatobiphenyl, 2,3,3',4'-biphenyldianhydride, and benzoquinonetetracarboxylic dianhydride.

Preferably, the dianhydride compound is selected from the group consisting of 4,4'-bisphenol A dianhydride (BPADA) and 4,4'-oxydiphthalicanhydride (ODPA). These dianhydride compounds are preferred because they include flexible linking groups like oxygen and isopropylidene, respectively, that improve melt processability of the final material.

Preferred PAI materials are synthesized using different ratios of compounds represented by formula (I-C) and the one or more dianhydrides of formulae (VII)-(IX). Said ratio affects the PAI thermal transitions. The higher the ratio of dianhydride, the more flexible the polymer chain, which results in lower transition temperatures and therefore, lower processing temperatures. Degradation temperatures are not affected by said ratio. An increased ratio of dianhydride monomer improves melt processability without compromising the overall thermal stability.

Homopolymers based on (I-C) and aromatic diamines which are not processable in the melt can be made processable by incorporating different amounts of one or more flexible dianhydrides. PAI copolymers that result from incorporation of a flexible dianhydride like 4,4'-bisphenol A dianhydride (BPADA) to enhance processability have a unique combination of properties such as T_{g}, Tₘ, melt viscosity, improved processability and long-term stability. These copolymers can be processed as a filament in the molten state to be used in FFF printing technology.

In a fourth synthetic route D) according to the present invention, the synthesis of PAI polymers can also be carried out by the polyimidation reaction of dianhydrides and diamines that comprise an amide linkage. Thus, according to route D), at least one dianhydride represented by formulae (VII)-(IX), as defined above, is reacted with at least one amide moiety-containing compound according to general formula (X), as defined below, 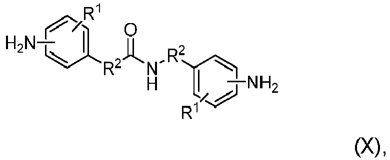 and, optionally, with at least one diamine compound according to general formula (V) or general formula (VI), as defined above.

According to various embodiments, preferred reaction conditions include a 1:1 mol ratio of reactants used, inert N₂ atmosphere, and high boiling point aprotic solvents, examples of which include, without limitation, DMAc and NMP as well as mixtures thereof. The final product is obtained in a two-step process through a polyamic acid intermediate.

The amide moiety-containing compound is represented by general formula (X) 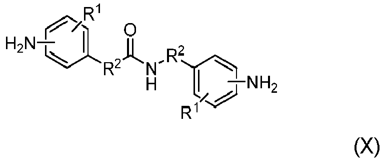
wherein each R¹ is independently selected from the group consisting of hydrogen, halogen, -C(O)-, linear or branched, substituted or unsubstituted C₁₋₆ alkyl, and linear or branched substituted or unsubstituted C₁₋₆ alkoxy, and
each R² is independently selected from the group consisting of linear or branched, substituted or unsubstituted C₁₋₆ alkylene, linear or branched, substituted or unsubstituted C₂₋₆ alkenylene, linear or branched, substituted or unsubstituted C₃₋₆ cycloalkylene, and linear or branched, substituted or unsubstituted C₆₋₁₀ arylene,
wherein each substituent is independently selected from the group consisting of halogen, linear or branched C₁₋₃ alkyl and linear or branched C₁₋₃ alkoxy.

According to various embodiments, the amide moiety-containing compound according to general formula (X) is preferably selected from the group consisting of 3,3'-diaminobenzanilide, 3,4'-diaminobenzanilide, 4,3'-diaminobenzanilide and 4,4'-diaminobenzanilide.

The use of an optional, flexible codiamine according to general formula (V) or general formula (VI), as defined above, allows the adjustment of the thermal transitions and melt processability of the final PAI. In this context, the diamines 2,2-bis[4-(4-aminophenoxy)phenyl]propane and 4,4'-(1,3-phenylenedioxy)dianiline are preferred, because they include flexible linking groups like ether and isopropylidene, respectively, resulting in improved melt processability of the PAI material. PAI materials may be synthesized by employing different ratios of amide-containing diamines and flexible codiamines. Furthermore, thermal transitions (T_{g}, Tₘ) and melt processability may be adjusted by selecting the different ratios between the codiamines used. An increased ratio of the flexible codiamine monomer improves melt processability, without compromising the overall thermal stability.

According to various embodiments, the PAIs of the present invention are not represented by the following general structure:

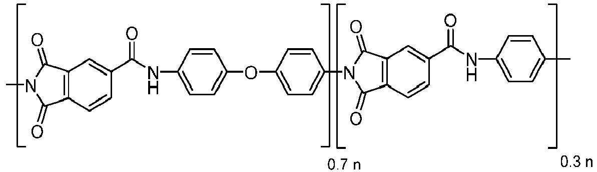

Or preferably not by the following general structure:

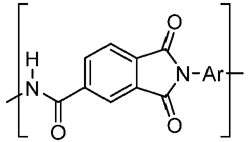

The PAI polymers, obtainable as described above, are suited for application in additive manufacturing processes, particularly for employment in extrusion-based and powder bed fusion printing techniques.

Extrusion-based 3D printing involves the deposition of thermoplastic materials. In particular, FFF (fused filament fabrication) technique requires the use of the thermoplastic material in the form of a filament. The extrusion process to create filaments requires working at temperatures high enough for the polymer materials to be in the molten state. The processing temperature window for thermoplastic polymers needs to above the Tₜᵣₐₙₛᵢₜᵢₒₙ and below the T_{d onset}, where Tₜᵣₐₙₛᵢₜᵢₒₙ corresponds to the melting point (Tₘ) in the case of semicrystalline polymers or to the glass transition temperature (T_{g}) for amorphous polymers, while the T_{d onset} is the starting temperature of degradation. The extrusion process will typically be performed at a temperature range at which the polymers behave like a fluid. The upper temperature limit for the processing process should be established below the T_{d onset} to avoid undesirable thermal degradation or crosslinking.

Long-term thermal stability in the melt at the extrusion temperature is another important requirement that thermoplastic materials need to fulfil to be processed as filaments. PAI materials need to withstand the extrusion conditions to be successfully processed as filaments.

As herein described, the molecular design of the PAI materials synthesized according to the above-described methods A)-D) is optimized for a good balance of thermo-processability, thermo-stability and material properties. Based on the different synthetic methods, PAI formulations showing a large processing window, good flowability in the melt at temperatures below the T_{d onset} and good long-term thermal stability at the processing temperatures may be prepared. The PAI materials described herein are suitable to be processed as filaments for application in the FFF printing technique.

Another important aspect influencing extrusion is the viscosity in the melt. Ideally, melt viscosities should be in the range of 700 to < 2000 Pa·s for a polymer material to be extruded as a filament. Higher melt viscosities could significantly impede the extrusion process. The PAI materials could be successfully extruded as filaments at a temperature at which the PAIs behave as a liquid with melt viscosities in the range of 700 to < 2000 Pa·s and quite below the T_{d onset} to avoid degradation, thermal-oxidation or undesirable crosslinking.

Molecular weight as well as chemical structure are variables affecting the viscosity of a polymer melt. Within a series of polymers with optimized molecular weights in the same range, the differences observed in viscosity can be directly correlated with the differences in their chemical structure. The more rigid polymer structures tend to impart higher melt viscosities. Viscosity in the melt for a PAI formulation at the desired extrusion temperature can be adjusted in the range of 700 to < 2000 Pa·s by tuning the polymer chemical structure. The incorporation of flexible building blocks allows to decrease the melt viscosity resulting in more processable PAI materials.

In various embodiments, the melt viscosity of the PAI polymers herein described is up to about 2000 Pa·s, preferably < 2000 Pa·s, more preferably in the range of about 700 to about < 2000 Pa·s.

Preferred molecular weights of PAI polymers obtainable by the above detailed methods lie in the range of about 2000 g/mol to about 100000 g/mol, preferably in the range of about 10000 g/mol to about 30000 g/mol.

Preferred melting points of the described PAI polymers are in the range of about 20 °C to about 380 °C, preferably in the range of about 200 °C to about 300 °C.

Melt stability of PAIs at the extrusion temperature is another important factor. Undesirable crosslinking reactions can occur during the heating process resulting in a significant increase in the melt viscosity, which is undesirable for melt-processing. Reactive end groups such as the amine or isocyanate present in the PAI are known to be responsible of crosslinking reactions taking place at high temperatures. Blocking of these terminal reactive groups results in improved high-temperature stability of the melt viscosity. Thus, according to certain embodiments, the PAI polymer obtainable as described herein may comprise one or more end-capping groups. Phthalic anhydride can be used as an end-capper for improving long term melt stability at the processing temperature. The use of other non-reactive end-cappers is also possible, examples of which include, without limitation maleic anhydride, naphthalic anhydride, homophthalic anhydride, succinic anhydride, nadic anhydride, carbic anhydride or phthalic anhydride derivatives, like tetrafluorophthalic anhydride. Isothermal viscosity measurements conducted at the potential extrusion temperatures demonstrate a better long-term melt stability for the PAI end-capped formulations.

The herein described PAI polymers may be processed as filaments to be used in the FFF printing technique. To this end, in an exemplary processing method, PAI flakes or pellets are fed into a hopper of an extruder such as a single or twin-extruder. The PAI flakes or pellets are melted in the extruder. Extrusion is performed at a temperature at which the polymer is in the molten state and is thermally stable. The temperature in the extruder is chosen to be between the Tₜᵣₐₙₛᵢₜᵢₒₙ and the T_{d onset}. The melted material flows through a die of the extruder and is extruded as a filament, which is typically 1 to 2 mm in diameter. After extrusion, the filament is cooled and rolled onto a spool which is suitable to be fed directly into the FFF 3D printer.

In various embodiments, the glass transition temperature T_{g} of the PAI polymers obtainable by the described methods advantageously lies in the range of about -50 °C to about 250 °C, preferably in the range of about 20 °C to about 200 °C.

The onset degradation temperature T_{d onset} of the PAI polymers obtainable as described is, in some embodiments, within the range of about 150 °C to about 450 °C, preferably in the range of about 250 °C to about 430 °C.

For application in powder bed fusion printing processes, the respective material used as feedstock is usually provided in ready-to-use powder, particulate form. A commonly used method to obtain fine powders is cryogrinding. It consists in the milling of the material between two counter-rotating discs at -196 °C. The method yields particles with sharp edges and a wide size distribution, which can affect the powder flowability. Other approaches consist in wet methods to obtain PAI powders. Dissolution-precipitation and solution-precipitation were applied at elevated temperatures, but the poor solubility of PAI in common organic solvents limits the use of these methods. Melt blending, however, yields PAI powders with desired morphology and particle size and suitable for powder bed fusion printing methods. Melt blending is an eco-sensitive blending process due to the absence of organic solvents.

Thus, according to various embodiments, PAIs are blended with one or more water soluble polymers, particularly polyethylene glycol (PEG), poly(vinyl alcohol) (PVA) and/or polyvinylpyrrolidone (PVP). In some embodiments, the weight ratio of the PAI polymer and the at least one water-soluble polymer is in the range of about 5:95 to about 50:50, preferably in the range of about 10:90 to about 40:60. The blending is preferably performed at a temperature between the glass transition and the degradation temperature of each polymer used (typically, 170-220°C) in inert atmosphere. An emulsion of spherical PAI droplets in the water-soluble polymer matrix may be obtained. PAI powder can be recovered after dissolving the hydrophilic polymer matrix in water. Melt-blending provides for spherically shaped particles with broad size distribution. In certain embodiments, the PAI polymer according to the present invention is provided in particulate form, wherein the particle size of the polymer particles is preferably in the range of about 1 µm to about 120 µm, more preferably in the range of about 10 µm to about 100 µm.

The PAI polymers can be used alone or in mixtures of different PAI polymers. Additionally it can be favorable to added additives and/or fillers, like antioxidants, to further improve the properties. To add additives and/or fillers the PAI polymer could be dissolved in a solvent, like NMP, then adding the filler and upon cooling, a precipitate can be formed containing the additive and/or filler inside the PAI polymer.

The PAI polymer, obtainable as described herein, may further generally be characterized by its dielectric constant. PAIs are known to show low dielectric constant, making them suitable for employment as insulators for high frequency applications, e.g., transformers, electric motors, inductors, generators, actuators etc. PAIs are also typically used as a coating for magnet wires. The dielectric constant can be measured by means of the non-contacting electrode method, also called air gap method. In various embodiments, the dielectric constant of the PAI polymers described herein is in the range of about 1 to about 3, preferably in the range of about 2 to about 2.4.

According to the present invention, a PAI polymer as described herein is suitable for employment and thus to be advantageously used in an additive manufacturing method. According to various embodiments, the additive manufacturing method is selected from the group consisting of an extrusion-based additive manufacturing method, preferably Fused Filament Fabrication (FFF), and powder bed fusion method, preferably selected from the group consisting of Selective Laser Sintering (SLS) and Multi-Jet Fusion (MJF).

Another object of the present invention is an additive manufacturing method, the method comprising, in at least one step thereof, the use of at least one PAI polymer, as described herein above, as feedstock. In some embodiments, the additive manufacturing method is selected from the group consisting of an extrusion-based additive manufacturing method, preferably Fused Filament Fabrication (FFF), and powder bed fusion method, preferably selected from the group consisting of Selective Laser Sintering (SLS) and Multi-Jet Fusion (MJF).

It is understood that all embodiments disclosed herein in relation to the polymeric compositions, methods, and uses of the invention are similarly applicable to articles formed therefrom/thereby, insofar applicable, and *vice versa.*

Accordingly, the present invention is also directed to a three-dimensional part obtainable in an additive manufacturing method, as described herein above.

The following examples are given to illustrate the present invention. Because these examples are given for illustrative purposes only, the invention should not be deemed limited thereto.

### Examples

### General characterization

The chemical structure of the PAIs was characterized by ¹H and ¹³C{¹H} nuclear magnetic resonance (NMR). The molecular weights (number and weight average molecular weights) and the polydispersity of the final polymers were determined by GPC, from polystyrene standards. Short-term thermal stability of PAIs was estimated from the 1% weight loss temperature (T_{d onset}) using thermogravimetry (TGA) with a heating rate of 10°C/min under N₂ inert and oxygen atmosphere. The glass transition (T_{g}), crystallization (T_{c}) and melting (Tₘ) temperatures were determined by differential scanning calorimetry (DSC) with a heating rate of 10°C/min under inert atmosphere. The melt viscosity evaluation was analyzed on a rotational rheometer. The complex viscosity of PAIs was measured as a function of temperature, from 280°C to 360°C.

### Example 1:

### Synthesis of PAIs from trimellitic anhydride (TMA) and commercially available diisocyanates

TMA (7.6852 g, 40 mmol) was placed into a 100 mL three-necked round-bottom flask equipped with a mechanical stirrer, nitrogen gas inlet tube, reflux condenser, thermometer and oil bath. 50 mL of dry NMP were added and the TMA was stirred until it completely dissolved. The diisocyanate (40 mmol) was then added followed by additional 30 mL of NMP. The mixture was rapidly heated to 130 °C under N₂ atmosphere and kept at this temperature for about 13 hours. PAI polymers were isolated by pouring the polymer solution into water. The isolated polymers were carefully washed and dried in an oven at 60 °C overnight.

**Table 1: Thermal characterization and molecular weight of the PAI polymers prepared from commercially available diisocyanates and trimellitic anhydride (TMA).**

| ***Diisocyanate*** | ***T_{g}*(°C)*** | ***T_{d onset}*** *(°C)*** | ***T_{d(10%)} (°C)*** | ***PAI melt flowability*** | ***Mₙ*^{§} *(g*/*mol)*** | ***IP*^{§}** |
|---|---|---|---|---|---|---|
| MDI | 268 | 190 | 446 | Poor | 9900 | 2.3 |
| Desmodur E20100 | -55 / 190 | 200 | 330 | Poor | 900 | 6.7 |
| Desmodur E15 | -40 | 220 | 320 | Good | 22000 | 3.3 |

| | | | | | | |
|---|---|---|---|---|---|---|
| * Determined by DSC in the first heating scan. ** Determined by TGA as the 1% mass loss. ^{§} Determined by GPC, using THF as solvent and polystyrene as standards. | | | | | | |

### Example 2:

### Synthesis of PAIs from trimellitic anhydride (TMA) and in-house synthesized diisocyanate prepolymers based on polyTHF

The aliphatic diol (20 mmol) was placed in a three-necked round-bottom flask fitted with a nitrogen gas inlet tube, magnetic stirrer, condenser and drying tube. 40 mL of dry NMP were added followed by the aromatic isocyanate (40 mmol) and dibutyltin dilaurate (DBTDL) (10% mol) as catalyst. The mixture was heated up to 80 °C for 5 h to end-cap the macrodiol. The TMA chain extender (3.8426 g, 20 mmol) was then added to the mixture, and the temperature was increased up to 130°C for 13h. The PAI polymers were isolated by pouring the polymer solution into water. The isolated polymers were carefully washed and dried in an oven at 60 °C overnight.

**Table 2: Thermal characterization and molecular weight of the PAI polymers prepared from in-house synthesized isocyanate pre-polymers based on poly(THF).**

| ***Isocyanate pre-polymer precursors*** | | ***PAI thermal properties*** | | | | ***PAI melt flowability*** | ***PAI molecular weight*^{§}** | |
|---|---|---|---|---|---|---|---|---|
| ***Isocyanate*** | ***polyTHF Mₙ (g*/*mol)*** | ***T_{g}*(°C)*** | ***Tₘ*(°C)*** | ***T_{c}**(°C)*** | ***T_{d onset}***(°C)*** | | ***Mₙ (g*/*mol)*** | ***IP*** |
| **MDI** | 650 | -10 | -- | -- | 190 | Poor | 7000 | 1.7 |
| | 2000 | -- | 20 | -21 | 220 | Poor | 10900 | 1.9 |
| **TDI** | 650 | -15 | -- | -- | 190 | Good | 4800 | 1.8 |
| | 2000 | -- | 23 | -- | 200 | Good | 6300 | 2.3 |

| | | | | | | | | |
|---|---|---|---|---|---|---|---|---|
| *Determined by DSC in the first heating scan. ** Determined by DSC in the first cooling scan. *** Determined by TGA as the 1% mass loss. ^{§} Determined by GPC, using THF as solvent and polystyrene as standards.Not detected. | | | | | | | | |

### Example 3:

### Synthesis of PAIs from trimellitic anhydride (TMA) and in-house synthesized diisocyanate prepolymers based on aliphatic polyesters

The polyester diol (20 mmol) was placed in a three-necked round-bottom flask fitted with a nitrogen gas inlet tube, magnetic stirrer, condenser and drying tube. 40 mL of dry NMP were added followed by the aromatic isocyanate (40 mmol) and dibutyltin dilaurate (DBTDL) (10% mol) as catalyst. The mixture was heated up to 80°C for 5h to end-cap the polyester diol. The TMA chain extender (3.8426 g, 20 mmol) was then added to the mixture, and the temperature was increased up to 130 °C for 13 h. The PAI polymer was isolated by pouring the polymer solution into distilled water. The polymer was washed several times with distilled water and an additional time with EtOH. It was finally dried in an oven at 60 °C overnight.

**Table 3: Thermal characterization and molecular weight of the PAI polymer prepared from in-house synthesized isocyanate pre-polymer based on Dynacoll 7362 polyester.**

| ***Isocyanate prepolymer precursors*** | | ***PAI thermal properties*** | | | | ***PAI melt flowability*** | ***PAI molecular weight*^{§}** | |
|---|---|---|---|---|---|---|---|---|
| ***Isocyanate*** | ***polyester*** | ***T_{g}*(°C)*** | ***Tₘ*(°C)*** | ***T_{c}**(°C)*** | ***T_{d onset}**** *(°C)*** | | ***Mₙ (g*/*mol)*** | ***IP*** |
| **TDI** | Dynacoll 7362 | -22 | 40/56 | 15 | 200 | Good | 7700 | 1.8 |

| | | | | | | | | |
|---|---|---|---|---|---|---|---|---|
| *Determined by DSC in the first heating scan. ** Determined by DSC in the first cooling scan. *** Determined by TGA as the 1% mass loss. ^{§} Determined by GPC, using THF as solvent and polystyrene as standard. | | | | | | | | |

### Example 4:

### Synthesis of PAIs from end-capping of aliphatic isocyanates with TMA and chain-extension with MDI isocyanate.

The diisocyanate (10 mmol) was placed into a 100 mL three-necked round-bottom flask equipped with a mechanical stirrer, nitrogen gas inlet tube, reflux condenser, thermometer and oil bath. 5 mL of dry NMP were added and the diisocyanate was stirred until it completely dissolved. The TMA (3.8426g, 20 mmol) was then added followed by additional 5 mL of NMP. The mixture was rapidly heated to 130°C under N₂ atmosphere and kept at this temperature for 13 hours. Suibsequently, MDI (2.5025 g, 10 mmol) was added as chain extender. The reaction was kept at 130 °C for additional 4 hours. The PAI polymers were isolated by pouring the polymer solution into water. The polymers were carefully washed and dried in an oven at 60 °C for 15 hours.

**Table 4: Thermal characterization and molecular weight of the PAI polymers prepared from end-capping of aliphatic isocyanates with TMA and chain-extension with MDI**

| ***Isocyanate prepolymer*** | ***PAI thermal properties*** | | | | ***Melt Flowability*** | ***PAIs molecular weight*^{§}** | |
|---|---|---|---|---|---|---|---|
| | ***T_{g}*(°C)*** | ***Tₘ*(°C)*** | ***T_{c}**(°C)*** | ***T_{d onset}**** *(°C)*** | | ***Mn (g*/*mol)*** | ***IP*** |
| Desmodur XP 2617 | 64 | 180 | 150 | 220 | Good | 5300 | 2.4 |
| Tolonate XFLO 100 | 34 | -- | -- | 180 | Good | 5100 | 1.7 |
| Desmodur VPLS 2371 | -30 | -- | -- | 220 | Good | 5300 | 1.7 |

| | | | | | | | |
|---|---|---|---|---|---|---|---|
| * Determined by DSC in the first heating scan. ** Determined by DSC in the first cooling scan. *** Determined by TGA as the 1% mass loss. ^{§} Determined by GPC, using THF as solvent and polystyrene as standard. -- Not detected. **PAI-A:** PAI with Tolonate XFLO 100. | | | | | | | |

### Example 5:

### Synthesis of PAIs from TMA and diamines.

1.9213 g (10 mmol) of trimellitic anhydride and 4.1051 g (10 mmol) of 2,2-bis[4-(4-aminophenoxy)phenyl]propane were added to 2.6 g of N-methyl pyrrolidone (NMP), and 0.1551 g of triphenylphosphite was added to the mixture. The initial concentration of reactants in the total mixture was 70 % by weight. The mixture was stirred under a stream of dry nitrogen for 6 hours at 210-215 °C. NMP was added in small portions every hour until the end of the reaction period. During the reaction, waterwas distilled off as it was produced. The obtained polymerwas precipitated by pouring it into water. It was then filtered and washed several times with water and an additional time with ethanol. It was finally dried in an oven at 60 °C overnight.

**Table 5: Thermal characterization and molecular weight of the PAI polymer prepared from TMA and 2,2-bis[4-(4-aminophenoxy)phenyl]propane.**

| ***Diamine*** | ***Catalyst*** | ***T_{g}* (°C)*** | ***T_{d onset}** (°C)*** | ***Mn^{§} (g*/*mol)*** | ***IP*^{§}** |
|---|---|---|---|---|---|
| 2,2-bis[4-(4-aminophenoxy)phenyl]propane | Triphenylphosphite | 184 | 200 | 2900 | 2.6 |

| | | | | | |
|---|---|---|---|---|---|
| * Determined by DSC in the second heating scan. ** Determined by TGA as the 1% mass loss. ^{§} Determined by GPC, using DMAc as solvent and polystyrene as standard. | | | | | |

### Example 6:

### Synthesis of PAIs from trimellitic anhydride chloride (TMA-Cl) and diamines

A three-necked flask, equipped with a mechanical stirrer and gas inlet and outlet, was charged with 10 mmol of diamine or mixture of diamines and 10.0 mL of NMP. The mixture was stirred at room temperature in nitrogen atmosphere until the solid was entirely dissolved. Then, the solution was cooled down to 0 °C and TMA-Cl (2.1057 g, 10 mmol) was added, followed by 10 mL of NMP. The reaction mixture was stirred for 15 min at 0 °C. Then, the temperature was raised up to room temperature and the reaction mixture left overnight. Acetic anhydride (5.67 mL, 60 mmol) and pyridine (4.84 mL, 60 mmol) were then added, and the viscous solution was stirred at room temperature for 6 h, followed by heating for a further 1 h at 60 °C to promote imidation. The flask was cooled down to room temperature, and the polymer solution was poured dropwise in water, washed several times with water, and extracted in a Soxhlet with ethanol to remove traces of solvent and oligomers. The polymer was dried overnight in an oven at 60 °C.

**Table 6: Thermal characterization and molecular weight of the PAI polymers prepared from TMA-Cl and aromatic diamines. Diamine A = 4,4'-(1,3-phenylenedioxy)dianiline; Diamine B = 2,2-bis[4-(4-aminophenoxy)phenyl]propane.**

| ***Diamine mol* %** | | ***PAI thermal properties*** | | | | | ***PAI melt flowability*** | ***PAI molecular weight*^{§}** | |
|---|---|---|---|---|---|---|---|---|---|
| ***A*** | ***B*** | ***T_{g}* (°C)*** | ***Tₘ*** *(°C)*** | ***T_{c}** (°C)*** | ***T_{c}*** (°C)*** | ***T_{d} onset (°C)*** | | ***Mₙ (g*/*mo*/*)*** | ***IP*** |
| 100 | 0 | 207 | 360/380 | 212 | 300 | 380 | Poor | 19700 | 2.4 |
| 75 | 25 | 207 | 320/380 | 222 | -- | 400 | Poor | 22500 | 1.8 |
| 60 | 40 | 216 | 310 | -- | -- | 400 | Good | 18800 | 1.9 |
| 25 | 75 | 220 | -- | -- | -- | 400 | Good | 17500 | 2.0 |
| 0 | 100 | 220 | -- | -- | -- | 400 | Good | 16000 | 2.5 |

| | | | | | | | | | |
|---|---|---|---|---|---|---|---|---|---|
| * Determined in the second heating scan. ** Determined in the first heating scan. *** Determined in the first cooling scan. -- No detected. ^{§} Determined by GPC, using DMAc as solvent and polystyrene as standard. **PAI-1:** PAI with 25 mol % of Diamine A and 75 mol % of Diamine B. | | | | | | | | | |

### Example 7:

### Synthesis of PAIs from dianhydrides and amide containing diamines

A three-necked flask, equipped with a mechanical stirrer and gas inlet and outlet, was charged with 10 mmol of diamine or mixture of diamines and 10.0 mL of solvent (NMP or DMAc depending on the diamines used). The mixture was stirred at room temperature in a nitrogen atmosphere until the solid was entirely dissolved. Then, the solution was cooled down to 0 °C and 4,4'-bisphenol A dianhydride (BPADA) (5.2049 g, 10 mmol) was added, followed by 10 mL of solvent. The reaction mixture was stirred for 15 min at 0 °C, then the temperature was raised up to room temperature and the reaction mixture was left overnight. Acetic anhydride (5.67 mL, 60 mmol) and pyridine (4.84 mL, 60 mmol) were then added, and the viscous solution was stirred at room temperature for 6 h, followed by heating for a further 1 h at 60 °C to promote imidation. The flask was cooled down to room temperature, the polymer solution was poured dropwise in water and washed several times with ethanol to remove traces of solvent and oligomers. The polymer was dried overnight in an oven at 60 °C.

**Table 7: Thermal characterization and molecular weights of the PAI polymers prepared from 4,4'-bisphenol A dianhydride (BPADA), benzanilide and 2,2-bis[4-(4-aminophenoxy)phenyl]propane diamine (diamine B)**

| ***Chemical composition (mol* %)** | | ***Thermal properties*** | | | ***Melt flowability*** | ***Molecular weights***^{§} | |
|---|---|---|---|---|---|---|---|
| ***Benzanilide*** | ***Diamine B*** | ***T_{g}* (°C)*** | ***Tₘ*** *(°C)*** | ***T_{d onset}**** *(°C)*** | | ***Mₙ (g*/*mol)*** | ***IP*** |
| 100 | 0 | 245 | 371 | 330 | Poor | 11700 | 2.2 |
| 75 | 25 | 232 | 346 | 376 | Poor | 20000 | 2.3 |
| 50 | 50 | 208 | -- | 426 | Good | 17400 | 2.0 |
| 25 | 75 | 191 | -- | 435 | Good | 13200 | 1.9 |
| 0 | 100 | 188 | -- | 415 | Good | 19600 | 1.9 |

| | | | | | | | |
|---|---|---|---|---|---|---|---|
| * Determined in the second heating scan. ** Determined in the first heating scan. *** Determined by TGA as the 1% mass loss. -- Not detected. ^{§} Determined by GPC, using DMAc or NMP as solvent and polystyrene as standard. **PAI-2:** PAI with 25 mol % of benzanilide and 75 mol % of Diamine B. | | | | | | | |

### Example 8:

### Synthesis of PAIs from trimellitic anhydride chloride, dianhydrides and diamines

A three-necked flask, equipped with a mechanical stirrer and gas inlet and outlet, was charged with 20 mmol (5.8466 g) of 4,4'-(1,3-phenylenedioxy)dianiline and 20.0 mL of NMP. The mixture was stirred at room temperature in a nitrogen atmosphere until the solid was entirely dissolved. Then, the solution was cooled down to 0 °C and the mixture of TMA-Cl (x mmol) and 4,4'-bisphenol A dianhydride (BPADA) (20-x mmol) was added, followed by 20 mL of NMP. The reaction mixture was stirred for 15 min at 0 °C, then the temperature was raised up to room temperature and the reaction mixture was left overnight. Acetic anhydride (11.34 mL, 120 mmol) and pyridine (9.67 mL, 120 mmol) were then added, and the viscous solution was stirred at room temperature for 6 h, followed by heating for a further 1 h at 60 °C to promote imidation. The flask was cooled down to room temperature, the polymer solution was poured dropwise in water and washed several times with ethanol to remove traces of solvent and oligomers. The polymer was dried overnight in an oven at 60 °C.

**Table 8: Thermal characterization and molecular weight of the PAI polymers prepared from TMA-Cl, 4,4'-bisphenol A dianhydride (BPADA) and 4,4'-(1,3-phenylenedioxy)dianiline).**

| ***Chemical composition mol %*** | | ***PAI thermal properties*** | | | | ***PAI melt flowability*** | ***PAI molecular weight*^{§}** | |
|---|---|---|---|---|---|---|---|---|
| ***TMA-Cl*** | ***Dianhydride*** | ***T_{g}* (°C)*** | ***T_{c}** (°C)*** | ***Tₘ*** *(°C)*** | ***T_{d}* *** *onset (°C)*** | | ***Mₙ (g*/*mo*/*)*** | ***IP*** |
| 70 | 30 | 197 | 235 | 355 | 400 | Poor | 19000 | 2.0 |
| 40 | 60 | 193 | -- | -- | 425 | Good | 25700 | 2.2 |
| 25 | 75 | 182 | -- | -- | 430 | Good | 18600 | 2.0 |

| | | | | | | | | |
|---|---|---|---|---|---|---|---|---|
| * Determined in the second heating scan. ** Determined in the first heating scan. *** Determined by TGA as the 1% mass loss. -- No detected. ^{§} Determined by GPC, using DMAc or NMP as solvent and polystyrene as standard. **PAI-3:** PAI with 25 mol % of TMA-Cl and 75 mol % of dianhydride. **PAI-4:** PAI with 40 mol % of TMA-Cl and 60 mol % of dianhydride. | | | | | | | | |

### Example 9:

### PAIs long-term thermal stability evaluation

The long-term thermal stability of the PAI materials was evaluated at different potential extrusion temperatures. These temperatures were chosen as the temperatures at which the materials easily flowed below the degradation temperature. The samples were analyzed in a thermogravimetric analyzer (TGA) with isothermal experiments in air at the potential extrusion temperatures for periods of time of 30 min. After the analysis, the change in color, the weight loss and the solubility of the materials in polar aprotic solvents like NMP was evaluated.

**Table 9: Long-thermal stability values of PAIs.**

| ***PAI*** | ***T_{g} (°C)*** | ***T_{d onset} (°C)*** | ***Thermal stability at 290°C*** | | ***Thermal stability at 300°C*** | |
|---|---|---|---|---|---|---|
| | | | ***Weight loss (%)**** | ***Solubility*** | ***Weight loss (%)**** | ***Solubility*** |
| PAI-1 | 220 | 400 | | good | 0.3 | |
| PAI-2 | 191 | 350 | 0.5 | good | 0.3 | good |
| PAI-3 | 182 | 430 | 0.1 | good | 0.1 | good |
| PAI-4 | 193 | 425 | 0.2 | good | 0.3 | good |

| | | | | | | |
|---|---|---|---|---|---|---|
| *Weight loss (%) after 30 min of isothermal experiment in air at determined temperature. | | | | | | |

### Example 10:

### PAIs melt viscosity evaluation

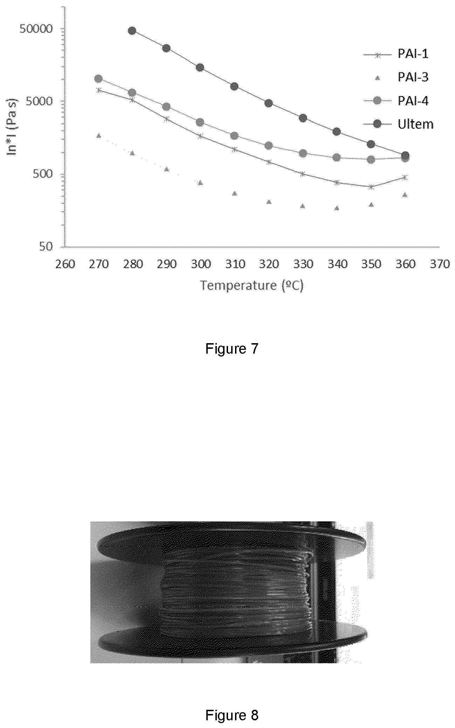

The polyamideimide copolymers were subjected to melt rheology measurements using rotational rheometer. Sample discs of 25 mm diameter and 1 mm thickness were prepared by press-molding of the powder-like PAI. To do so, 1 g of material was placed in a stain-steel mold and heat-pressed at temperatures between 275-300°C and 5 bars for several minutes. The complex viscosity (η*) of PAIs was measured as a function of temperature. Figure 7 shows η* of some PAI formulations as a function of temperature. A commercial Ultem 1010 filament for FFF served as reference. Complex melt viscosities at some potential extrusion temperatures (280, 290, 300 and 320 °C) for these formulations are shown in Table 10.

**Table 10: Melt complex viscosities (η*) of PAIs and a Polyimide Ultem as comparision at some potential extrusion temperatures.**

| | **Melt complex viscosity (η*) (Pa·s)** | | | |
|---|---|---|---|---|
| **PAI** | **280 °C** | **290 °C** | **300 °C** | **320 °C** |
| PAI-1 | 5260 | 2860 | 1680 | 725 |
| PAI-3 | 970 | 590 | 380 | 210 |
| PAI-4 | 6640 | 4230 | 2610 | 1230 |
| Ultem | 47330 | 27180 | 14700 | 4770 |

### Example 11:

### PAI filament fabrication

PAI-3 was extruded from pellets using a 3devo extruder with the following extrusion conditions:
Heater 4: 295 °C
Heater 3: 295 °C
Heater 2: 295 °C
Heater 1: 290 °C
Extrusion speed: 15 rpm
Cooling: 0%

The coiled-up filament is depicted in Figure 8.

### Example 12:

### Powder production by melt-blending

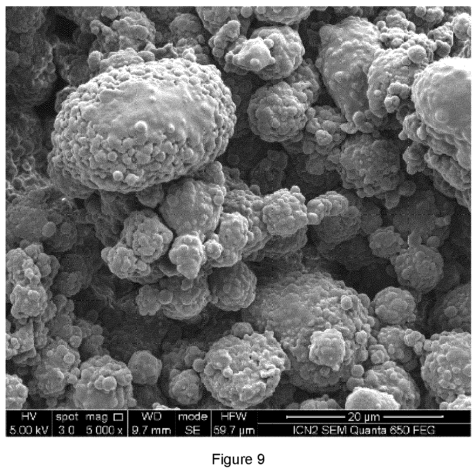

12 g of PAI-A obtained according to route A), is mixed with 18 g of PEG 35000 (40/60 w/w) in a 100 mL 2-necked round bottom flask with mechanical stirring under nitrogen for 15 minutes at 220 °C. Then, stirring is stopped and the blend is cooled down. Afterwards, 100 ml of water are added to dissolve the water-soluble polymer. The PAI powder can be recovered by either filtration or centrifugation. Finally, the powder is dried at 60 °C for 15 h. The powder size and morphology are analysed by SEM. The particles have sizes between 1 - 23 µm with wide size distribution and round shape (Figure 9).

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination. The words "comprises/comprising" and the words "having/including" when used herein with reference to the present invention are used to specify the presence of stated features, integers, steps or components but does not preclude the presence or addition of one or more other features, integers, steps, components or groups thereof.

### Example 13:

### Flame retardancy

Flame-retardancy tests were performed following the guidelines provided on UL94 Sixth Edition (March 28, 2013), revised on July 11, 2014. Vertical Burning Test consists on the clamping of standard bar specimens, with their longitudinal axis vertical, positioned 300 mm above a cotton bed, as depicted in Figure 10. The specimens are to be 125±5 mm long by 13±0.5 mm wide and having a thickness between 0.025 mm and 13 mm. The specimen has to be burned twice for 10 seconds each burning. The time for each burn must be measured (t₁ for the first burn and t₂ for the second burn). Finally, the materials must be classified in group V-0, V-1 or V-2 according to the information displayed in the table below. All the requirements must be fulfilled in order for the material to be assigned to the corresponding category.

| ***Criteria conditions*** | ***V-0*** | ***V-1*** | ***V-2*** |
|---|---|---|---|
| Afterflame time for each individual specimen t₁ or t₂ | ≤ 10s | ≤ 30s | ≤ 30s |
| Total after flame time for any condition set (t₁ plus t₂ for the specimens) | ≤ 50s | ≤ 250s | ≤ 250s |
| After flame of any specimen up to the holding clamp | No | No | No |
| Dripping or flaming particles (cotton ignited) | No | No | Yes |

PAI-3 has excellent flame-retardant characteristics (afterflame time less than 10 s, no dripping and cotton ignition) and it was classified as V-0 material.

## Claims

1. A thermoplastic polyamideimide (PAI) polymer for use in an additive manufacturing process, wherein the PAI polymer is the reaction product obtainable by reacting:
A)
- at least one compound according to general formula (I-A) 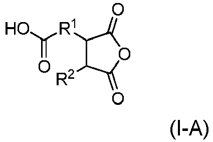 wherein, in formula (I-A),
R¹ represents a substituted or unsubstituted C₁₋₆ hydrocarbon moiety,
R² represents hydrogen or a substituted or unsubstituted C₁₋₆ hydrocarbon moiety,
wherein R¹ and R² may be linked to form a substituted or unsubstituted C₅₋₇ cycloalkyl, a substituted or unsubstituted C₅₋₇ cycloalkenyl, or a substituted or unsubstituted C₆₋₁₀ aryl, wherein each substituent is independently selected from the group consisting of halogen, NO₂, linear or branched C₁₋₃ alkyl, linear or branched C₂₋₃ alkenyl, linear or branched C₁₋₃ alkoxy, - C(O)CH₃, -OC(O)CH₃, phenyl, halogen-substituted phenyl, benzyl, and halogen-substituted benzyl,
and wherein two substituents may be linked to form an optionally halogen-, C₁₋₂ alkyl-, and/or C₁₋₂ alkoxy-substituted C₅₋₇ cycloalkyl or an optionally halogen-, C₁₋₂ alkyl-, and/or C₁₋₂ alkoxy-substituted C₆₋₁₀ aryl;
and
- at least one diisocyanate according to general formula (II) 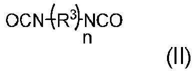 wherein, in formula (II),
R³ is independently selected from the group consisting of linear or branched, substituted or unsubstituted C₁₋₃₀ alkyl, linear or branched, substituted or unsubstituted C₁₋₃₀ heteroalkyl, substituted or unsubstituted C₃₋₃₀ cycloalkyl, substituted or unsubstituted aryl, substituted or unsubstituted C₇₋₃₀ alkylaryl, substituted or unsubstituted C₃₋₃₀ heterocycloalkyl or heteroaryl, wherein each substituent is independently selected from the group consisting of halogen, linear or branched C₁₋₆ alkyl, and linear or branched C₁₋₆ alkoxy, and each heteroatom is independently selected from the group consisting of O, N, S, Si and P; and n is an integer from 1 to 30; and/or
- at least one diisocyanate according to general formula (III) 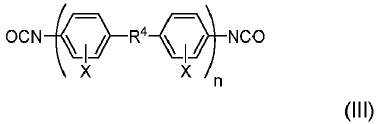 wherein, in formula (III),
R⁴ is defined as R³ of formula (II) above, and each X is independently selected from the group consisting of hydrogen, halogen, alkoxy and linear or branched C₁₋₆ alkyl, and n is an integer from 1 to 30; and/or
- at least one diisocyanate according to general formula (IV) 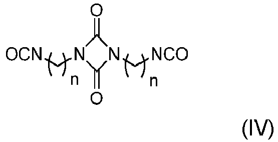 wherein, in formula (IV), n is an integer from 2 to 18; or
- at least one diisocyanate, which is the reaction product of an aromatic diisocyanate selected from the aromatic diisocyanates according to formula (II) and (III) above, and a diol, preferably selected from the group consisting of poly(tetrahydrofurane) (polyTHF), polyester diols, and polyether diols with molecular weights ranging from 250 g/mol to 8500 g/mol; or
- at least one aliphatic diisocyanate selected from the aliphatic diisocyanates according to formula (II) and (III) above, wherein the reaction product thus obtained is further reacted with an aromatic diisocyanate selected from the aromatic diisocyanates according to formula (II) and (III) above;
B)
- at least one compound according to general formula (I-B) 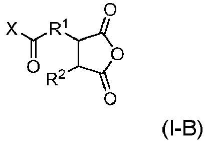 wherein, in formula (I-B),
X represents OH or Cl,
R¹ represents a substituted or unsubstituted C₁₋₆ hydrocarbon moiety,
R² represents hydrogen or a substituted or unsubstituted C₁₋₆ hydrocarbon moiety,
wherein R¹ and R² may be linked to form a substituted or unsubstituted C₅₋₇ cycloalkyl, a substituted or unsubstituted C₅₋₇ cycloalkenyl, or a substituted or unsubstituted C₆₋₁₀ aryl, wherein each substituent is independently selected from the group consisting of halogen, NO₂, linear or branched C₁₋₃ alkyl, linear or branched C₂₋₃ alkenyl, linear or branched C₁₋₃ alkoxy, - C(O)CH₃, -OC(O)CH₃, phenyl, halogen-substituted phenyl, benzyl, and halogen-substituted benzyl,
and wherein two substituents may be linked to form an optionally halogen-, C₁₋₂ alkyl-, and/or C₁₋₂ alkoxy-substituted C₅₋₇ cycloalkyl or an optionally halogen-, C₁₋₂ alkyl-, and/or C₁₋₂ alkoxy-substituted C₆₋₁₀ aryl;
and
- at least one diamine compound according to general formula (V) or general formula (VI) 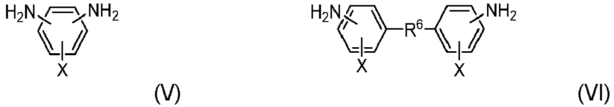
wherein, in formulas (V) and (VI),
each X is independently selected from the group consisting of hydrogen, halogen, linear or branched C₁₋₆ alkyl and linear or branched C₁₋₆ alkoxy, and
R⁶ is selected from the group consisting of -O-, -S-, -C(O)-, -S(O)₂-, -Si(CH₃)₂-, -(CO)O-, - (CO)NH-, -C(CF₃)₂-, linear or branched, substituted or unsubstituted C₁₋₃₀ alkyl, linear or branched, substituted or unsubstituted C₁₋₃₀ heteroalkyl, linear or branched, substituted or unsubstituted C₃₋₃₀ cycloalkyl, linear or branched, substituted or unsubstituted C₃₋₃₀ heterocycloalkyl, a substituted or unsubstituted C₆₋₂₆ aryl, a substituted or unsubstituted C₆₋₂₆ heteroaryl, a substituted or unsubstituted C₇₋₃₀ alkylaryl, a substituted or unsubstituted C₇₋₃₀ heteroalkylaryl,
wherein each substituent is independently selected from the group consisting of halogen, linear or branched C₁₋₃ alkyl and linear or branched C₁₋₃ alkoxy, and
wherein each heteroatom is independently selected from the group consisting of O, N, S, P and Si, preferably O, S, and Si;
C)
- at least one compound according to general formula (I-C) 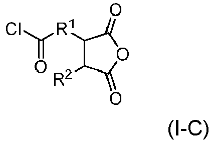 wherein
R¹ represents a substituted or unsubstituted C₁₋₆ hydrocarbon moiety,
R² represents hydrogen or a substituted or unsubstituted C₁₋₆ hydrocarbon moiety,
wherein R¹ and R² may be linked to form a substituted or unsubstituted C₅₋₇ cycloalkyl, a substituted or unsubstituted C₅₋₇ cycloalkenyl, or a substituted or unsubstituted C₆₋₁₀ aryl,
wherein each substituent is independently selected from the group consisting of halogen, NO₂, linear or branched C₁₋₃ alkyl, linear or branched C₂₋₃ alkenyl, linear or branched C₁₋₃ alkoxy, - C(O)CH₃, -OC(O)CH₃, phenyl, halogen-substituted phenyl, benzyl, and halogen-substituted benzyl,
and wherein two substituents may be linked to form an optionally halogen-, C₁₋₂ alkyl-, and/or C₁₋₂ alkoxy-substituted C₅₋₇ cycloalkyl or an optionally halogen-, C₁₋₂ alkyl-, and/or C₁₋₂ alkoxy-substituted C₆₋₁₀ aryl;
- at least one dianhydride compound according to general formula (VII), general formula (VIII), and/or general formula (IX) 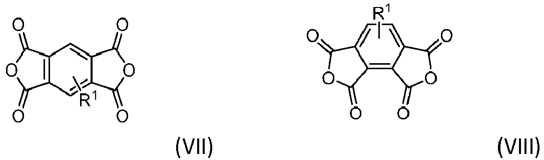 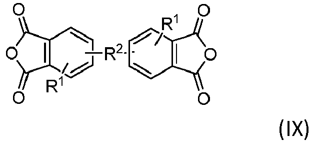 wherein, in formulas (VII)-(IX),
R¹ independently is selected from the group consisting hydrogen, halogen, linear or branched C₁₋₃ alkyl, and linear or branched C₁₋₃ alkoxy; and
R² is selected from the group consisting of -O-, -S-, -C(O)-, -S(O)₂-, linear or branched, optionally halogen-substituted C₁₋₅ alkyl, linear or branched, optionally halogen-substituted C₁₋₅ heteroalkyl, linear or branched, optionally halogen-substituted C₂₋₅ alkenyl, linear or branched, optionally halogen-substituted C₂₋₅ heteroalkenyl, a -O-R³-O- group, wherein R³ is selected from the group consisting of 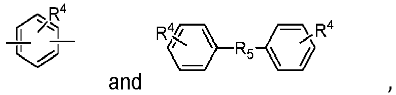 wherein each R⁴ is independently selected from hydrogen, halogen, and linear or branched C₁₋₃ alkoxy and linear or branched C₁₋₃ alkyl, and R⁵ is selected from the group consisting of -O-, -S-, -C(O)-, -S(O)₂-, linear or branched, optionally halogen-substituted C₁₋₅ alkyl, linear or branched, optionally halogen-substituted C₁₋₅ heteroalkyl, linear or branched, optionally halogen-substituted C₂₋₅ alkenyl, linear or branched, optionally halogen-substituted C₂₋₅ heteroalkenyl,
wherein each heteroatom is selected from the group consisting of O, N, S, P and Si, preferably O, S and Si;
and
- at least one diamine compound according to general formula (V) or general formula (VI) as defined above;
or
D)
- at least one dianhydride according to formulas (VII)-(IX) as defined above,
- at least one amide moiety-containing compound according to general formula (X) 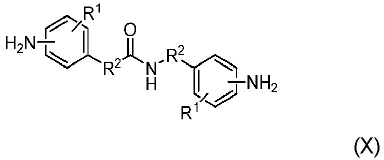 wherein, in formula (X),
each R¹ is independently selected from the group consisting of hydrogen, halogen, -C(O)-, linear or branched, substituted or unsubstituted C₁₋₆ alkyl, and linear or branched substituted or unsubstituted C₁₋₆ alkoxy, and
each R² is independently selected from the group consisting of linear or branched, substituted or unsubstituted C₁₋₆ alkylene, linear or branched, substituted or unsubstituted C₂₋₆ alkenylene, linear or branched, substituted or unsubstituted C₃₋₆ cycloalkylene, and linear or branched, substituted or unsubstituted C₆₋₁₀ arylene,
wherein each substituent is independently selected from the group consisting of halogen, linear or branched C₁₋₃ alkyl and linear or branched C₁₋₃ alkoxy,
and, optionally,
- at least one diamine compound according to general formula (V) or general formula (VI) as defined above.

2. The polymer for use according to claim 1, wherein
- the compound according to general formula (I-A) is selected from the group consisting of the following compounds (I-1)-(I-24): 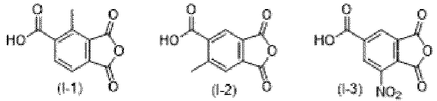 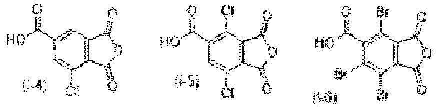 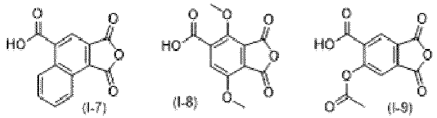 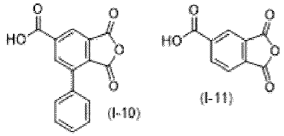 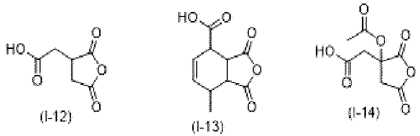 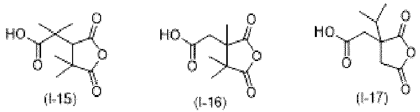 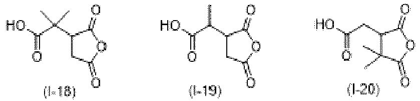 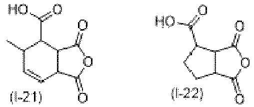 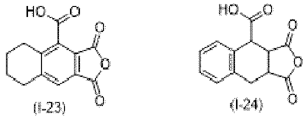 and/or
- the compound according to formula (I-B) is selected from the group consisting of compounds (I-1)-(I-24) above and from the group consisting of the following compounds (I-25)-(I-48) : 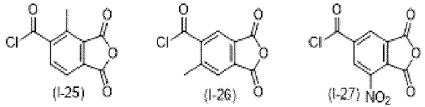 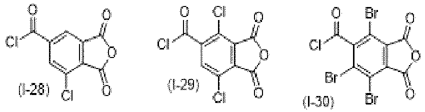 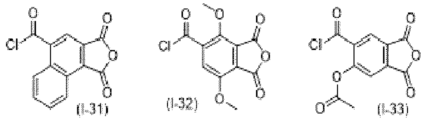 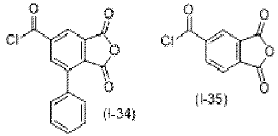 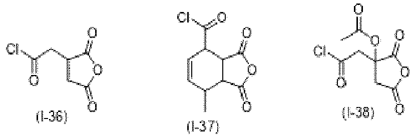 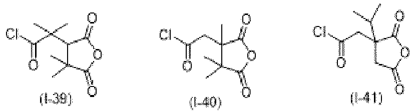 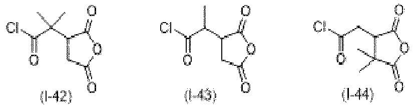 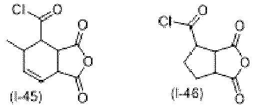 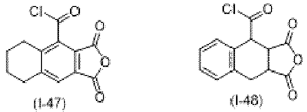 and/or
- the compound according to general formula (I-C) is selected from the group consisting of compounds (I-25)-(I-48); and/or
- the diisocyanate according to formula (II), (III) or (IV) are selected from the group consisting of DesmodurXP 2617, DesmodurVPLS 2371, Desmodur E20100, Desmodur E15, Tolonate X FLO 100, 4,4'-methylenebis (phenyl isocyanate) (MDI) and tolylene-2,4-diisocyanate (TDI), 3,3'-dimethoxylbiphenyl-4,4'-diisocyanate, m,p-phenylene diisocyanate, 1,5-naphthalene diisocyanate, 4,4'-diphenylmethane diisocyanate, 3,3'-dimethyl-4,4'-diphenylmethane diisocyanate, 3,3'-dimethyl-4,4'-biphenyldiisocyanate, 4,4'-diphenylisopropylidene diisocyanate, 3,3'-dimethyl-4,4'-diphenyl diisocyanate, dianisidine diisocyanate, and toluidine diisocyanate; and/or
- the diamine compound according to formula (V) or formula (VI) is selected from the group consisting of 2,2-bis[4-(4-aminophenoxy)phenyl]propane, 4,4'-(1,3-phenylenedioxy)dianiline, bis[4-(3-aminophenoxy)phenyl]sulfone, bis[4-(4-aminophenoxy)phenyl] sulfone, 2,2-bis[4-(4-aminophenoxy)phenyl]hexafluoropropane, bis[4-(4-aminophenoxy)phenyl]methane, 4,4'-bis(4-aminophenoxy)biphenyl, bis[4-(4-aminophenoxy)phenyl] ether, bis[4-(4-aminophenoxy)phenyl]ketone, 1,3-bis(4-aminophenoxy)benzene, 1,4-bis(4-aminophenoxy)benzene, 2,2'-dimethylbiphenyl-4,4'-diamine, 2,2'-bis(trifluoromethyl)biphenyl-4,4'-diamine, 2,6,2',6'-tetramethyl-4,4-diamine, 5,5'-dimethyl-2,2'-sulfonyl-biphenyl-4,4'-diamine, (4,4'-diamino)diphenyl ether, (4,4'-diamino)diphenylsulfone, (4,4'-diamino)benzophenone, (3,3'-diamino)benzophenone, (4,4'-diamino)diphenylmethane, (4,4'-diamino)diphenyl ether and (3,3'-diamino)diphenyl ether, preferably from 2,2-bis[4-(4-aminophenoxy)phenyl]propane and 4,4'-(1,3-phenylenedioxy)dianiline; and/or
- the dianhydride compound according to formula (VII), (VIII) or (IX) is selected from the group consisting of 4,4'-bisphenol A dianhydride (BPADA), 4,4'-oxydiphthalicanhydride (ODPA), 3,3',4,4'-benzophenone tetracarboxylic dianhydride (4,4-BTDA), 4,4'-(hexafluoroisopropylidene)diphthalic anhydride (6FDA), 3,3',4,4'-diphenylsulfonetetracarboxylic dianhydride, pyromellitic dianhydride, 3,3'-dimethyl-4,4'-diisocyanatobiphenyl, 2,3,3',4'-biphenyldianhydride, and benzoquinonetetracarboxylic dianhydride, preferably from 4,4'-bisphenol A dianhydride (BPADA) and 4,4'-oxydiphthalicanhydride (ODPA); and/or
- the amide moiety-containing compound according to general formula (X) is selected from the group consisting of 3,3'-diaminobenzanilide, 3,4'-diaminobenzanilide, 4,3'-diaminobenzanilide and 4,4'-diaminobenzanilide.

3. The polymer for use according to claim 1 or claim 2, wherein
- the molecular weight of the PAI polymer is in the range of about 2000 g/mol to about 100000 g/mol, preferably in the range of about 10000 g/mol to about 30000 g/mol; and/or
- the melting point of the PAI polymer is in the range of about 20 °C to about 380 °C, preferably in the range of about 200 °C to about 300 °C; and/or
- the glass transition temperature T_{g} of the PAI polymer is in the range of about -50 °C to about 250 °C, preferably in the range of about 20 °C to about 200 °C; and/or
- the onset degradation temperature of the PAI polymer is in the range of about 150 °C to
- about 450 °C, preferably in the range of about 250 °C to about 430 °C; and/or
- the dielectric constant of the PAI polymer is in the range of about 1 to about 3, preferably in the range of about 2 to about 2.4; and/or
- the melt viscosity of the PAI polymer is up to about 2000 Pa·s, preferably < 2000 Pa·s, more preferably in the range of about 700 to about < 2000 Pa·s.

4. The polymer for use according to any one of claims 1-3, wherein the PAI polymer may comprise one or more end-capping groups.

5. The polymer for use according to any one of claims 1-4, wherein the PAI polymer is used in the form of a polymer blend, wherein the blend comprises one or more water-soluble polymers, preferably selected from the group consisting of polyethylene glycol (PEG), poly(vinyl alcohol) (PVA), and polyvinylpyrrolidone (PVP).

6. The polymer for use according to claim 5, wherein the weight ratio of the PAI polymer and the at least one water-soluble polymer is in the range of about 5:95 to about 50:50, preferably in the range of about 10:90 to about 40:60.

7. The polymer for use according to any one of claims 1-6, wherein the PAI polymer is provided in particulate form, wherein the particle size of the polymer particles is preferably in the range of about 1 µm to about 120 µm, more preferably in the range of about 10 µm to about 100 µm.

8. An additive manufacturing method, the method comprising, in at least one step thereof, the use of at least one PAI polymer according to any one of claims 1 to 7 as feedstock.

9. The polymer for use according to any one of claims 1 to 7 or the additive manufacturing method according to claim 8, wherein the additive manufacturing method is selected from the group consisting of an extrusion-based additive manufacturing method, preferably Fused Filament Fabrication (FFF), and powder bed fusion method, preferably selected from the group consisting of Selective Laser Sintering (SLS) and Multi-Jet Fusion (MJF).

10. A three-dimensional part, obtainable in an additive manufacturing method according to claim 8 or claim 9.
